# EUROPEAN PATENT APPLICATION

(11) **EP 4 412 361 A1**
(43) Date of publication of application: **07.08.2024**
(21) Application number: 22876933.7
(22) Date of filing: 30.09.2022
(51) Int. Cl.: H04W 72/04, H04L 5/00, H04W 72/12, H04W 8/24, H04W 76/28

(54) **METHOD FOR TRANSMITTING AND RECEIVING DOWNLINK CONTROL CHANNEL, AND DEVICE THEREFOR**

(30) Priority: 01.10.2021 KR 20210131178; 11.01.2022 KR 20220004218
(71) Applicant: LG Electronics Inc., Yeongdeungpo-gu Seoul 07336 (KR)
(72) Inventor: LEE, Sunghoon, Seoul 06772 (KR); KIM, Jaehyung, Seoul 06772 (KR); YANG, Suckchel, Seoul 06772 (KR); HWANG, Seunggye, Seoul 06772 (KR); KIM, Seonwook, Seoul 06772 (KR)
(74) Representative: Plasseraud IP
(86) International application number: PCT/KR2022/014733
(87) International publication number: WO 2023/055161

(57) **Abstract**

Disclosed is a method by which a terminal receives a physical downlink control channel (PDCCH) in a wireless communication system. In particular, the method is characterized by comprising: receiving downlink control information (DCI) including a bit field related to PDCCH monitoring adaptation; determining a PDCCH monitoring adaptation operation on the basis of the value of the bit field; and receiving the PDCCH on the basis of the PDCCH monitoring adaptation operation, wherein the number of bits included in the bit field is determined on the basis of the format of the DCI.

## Description

### TECHNICAL FIELD

The present disclosure relates to a method of transmitting and receiving a downlink control channel and device therefor, and more particularly, to a method of determining a physical downlink control channel (PDCCH) monitoring adaptation field and/or a PDCCH monitoring adaptation operation based on the value of the field, which varies depending on a downlink control information (DCI) format, and device therefor.

### BACKGROUND

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

### DISCLOSURE

### TECHNICAL PROBLEM

The present disclosure aims to a method of transmitting and receiving a downlink control channel and device therefor

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

### TECHNICAL SOLUTION

In an aspect of the present disclosure, provided herein is a method of receiving a physical downlink control channel (PDCCH) by a user equipment (UE) in a wireless communication system. The method may include: receiving downlink control information (DCI) including a bit field related to PDCCH monitoring adaptation; determining a PDCCH monitoring adaptation operation based on a value of the bit field; and receiving the PDCCH based on the PDCCH monitoring adaptation operation. A number of bits included in the bit field may be determined based on a format of the DCI.

Based on that the DCI has a first format, the bit field may include a first number of bits, and based on that the DCI has a second format, the bit field may include a second number of bits, where the first number and the second number may be different.

The first number may be greater than the second number.

The first format may be for a downlink (DL) signal, and the second format may be for an uplink (UL) signal.

Based on the DCI has a first format, the PDCCH monitoring adaptation may be related to PDCCH monitoring skipping, and based on the DCI has a second format, the PDCCH monitoring adaptation may be related to search space set group (SSSG) switching.

In another aspect of the present disclosure, provided herein is a UE configured to receive a PDCCH in a wireless communication system. The UE may include: at least one transceiver; at least one processor; and at least one memory operably connected to the at least one processor and configured to store instructions that, when executed, cause the at least one processor to perform operations. The operations may include: receiving DCI including a bit field related to PDCCH monitoring adaptation through the at least one transceiver; determining a PDCCH monitoring adaptation operation based on a value of the bit field; and receiving the PDCCH based on the PDCCH monitoring adaptation operation through the at least one transceiver. A number of bits included in the bit field may be determined based on a format of the DCI.

Based on that the DCI has a first format, the bit field may include a first number of bits, and based on that the DCI has a second format, the bit field may include a second number of bits, where the first number and the second number may be different.

The first number may be greater than the second number.

The first format may be for a DL signal, and the second format may be for a UL signal.

Based on the DCI has a first format, the PDCCH monitoring adaptation may be related to PDCCH monitoring skipping, and based on the DCI has a second format, the PDCCH monitoring adaptation may be related to SSSG switching.

In another aspect of the present disclosure, provided herein is a UE configured to receive a PDCCH in a wireless communication system. The UE may include: at least one transceiver; at least one processor; and at least one memory operably connected to the at least one processor and configured to store instructions that, when executed, cause the at least one processor to perform operations. The operations may include: receiving DCI including a bit field related to PDCCH monitoring adaptation; determining a PDCCH monitoring adaptation operation based on a value of the bit field; and receiving the PDCCH based on the PDCCH monitoring adaptation operation. A number of bits included in the bit field may be determined based on a format of the DCI.

In another aspect of the present disclosure, provided herein is a computer-readable storage medium including at least one computer program that causes at least one processor to perform operations. The operations may include: receiving DCI including a bit field related to PDCCH monitoring adaptation; determining a PDCCH monitoring adaptation operation based on a value of the bit field; and receiving the PDCCH based on the PDCCH monitoring adaptation operation. A number of bits included in the bit field may be determined based on a format of the DCI.

In another aspect of the present disclosure, provided herein is a method of transmitting a PDCCH by a base station (BS) in a wireless communication system. The method may include: determining a value of a bit field related to PDCCH monitoring adaptation based on a PDCCH monitoring adaptation operation; transmitting DCI including the bit field; and transmitting the PDCCH based on the PDCCH monitoring adaptation operation. A number of bits included in the bit field may be determined based on a format of the DCI.

In a further aspect of the present disclosure, provided herein is a BS configured to transmit a PDCCH in a wireless communication system. The BS may include: at least one transceiver; at least one processor; and at least one memory operably connected to the at least one processor and configured to store instructions that, when executed, cause the at least one processor to perform operations. The operations may include: determining a value of a bit field related to PDCCH monitoring adaptation based on a PDCCH monitoring adaptation operation; transmitting DCI including the bit field; and transmitting the PDCCH based on the PDCCH monitoring adaptation operation. A number of bits included in the bit field may be determined based on a format of the DCI.

### ADVANTAGEOUS EFFECTS

According to the present disclosure, various field configurations may be considered for downlink control information (DCI) formats capable of indicating physical downlink control channel (PDCCH) monitoring adaptation to a user equipment (UE) in a connected discontinuous reception (C-DRX) mode DRX. Accordingly, both a base station (BS) and the UE may improve power saving effects without any loss in terms of data transmission.

According to the present disclosure, the configurations of PDCCH monitoring adaptation indication fields as well as methods of indicating/configuring PDCCH monitoring adaptation, may be independently or interdependently indicated/configured to a UE. Accordingly, the PDCCH monitoring adaptation may be indicated to the UE within a discontinuous reception (DRX) active time, thereby not only reducing unnecessary power consumption but also performing conventional New Radio (NR) operations with no issues.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

### BRIEF DESCRIPTION OF THE DRAWINGS

FIGS. 1 and 2 are diagrams for explaining idle mode discontinuous reception (DRX) operation.
FIGS. 3 to 5 are diagrams for explaining DRX operation in a radio resource control (RRC) connected mode.
FIG. 6 is a diagram for explaining a method of monitoring DCI format 2_6.
FIGS. 7 to 9 are diagrams for explaining overall operation processes of a user equipment (UE) and a base station (BS) according to an embodiment of the present disclosure.
FIG. 10 illustrates an exemplary communication system applied to the present disclosure.
FIG. 11 illustrates an exemplary wireless device applicable to the present disclosure.
FIG. 12 illustrates an exemplary vehicle or autonomous driving vehicle applicable to the present disclosure.
FIG. 13 illustrates an extended reality (XR) device applicable to the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the present disclosure is not limited to the 3GPP communication system. For the background art, terms, and abbreviations used in the present disclosure, refer to the technical specifications published before the present disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars, and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability, and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

### DRX (Discontinuous Reception) operation

The UE uses Discontinuous Reception (DRX) in RRC_IDLE and RRC_INACTIVE state in order to reduce power consumption. When the DRX is configured, the UE performs a DRX operation according to DRX configuration information.

When the UE operates based on the DRX, the UE repeats ON/OFF for reception. For example, when the DRX is configured, the UE attempts to receive/detect a PDCCH (e.g., PDCCH monitoring) only in a predetermined time interval (e.g., ON), and does not attempt to receive the PDCCH in the remaining time period (e.g., OFF/sleep).

At this time, a time period during which the UE should attempt to receive the PDCCH is referred to as an On-duration, and this on-duration is defined once per DRX cycle. The UE can receive DRX configuration information from a gNB through a RRC signaling and operate as the DRX through a reception of the (Long) DRX command MAC CE.

The DRX configuration information may be included in the MAC-CellGroupConfig. The IE MAC-CellGroupConfig is used to configure MAC parameters for a cell group, including DRX.

DRX (Discontinuous Reception) means an operation mode for enabling a UE (User Equipment) to reduce battery consumption so that the UE can receive/monitor a downlink channel discontiguously. That is, a UE configured with DRX can reduce power consumption by receiving a DL signal discontiguously. The DRX operation is performed in a DRX cycle indicative of a time interval in which On Duration is periodically repeated. The DRX cycle includes On Duration and sleep duration (or Opportunity for DRX). The On Duration indicates a time interval in which a UE monitors a PDCCH in order to receive the PDCCH. DRX may be performed in an RRC (Radio Resource Control)_IDLE state (or mode), an RRC_INACTIVE state (or mode), or an RRC_CONNECTED state (or mode). In the RRC_IDLE state and the RRC_INACTIVE state, DRX is used to receive a paging signal discontiguously.
- RRC_Idle state: state in which a radio connection (RRC connection) is not established between a base station and a UE.
- RRC Inactive state: state in which a radio connection (RRC connection) has been established between a base station and a UE, but a radio connection is inactivated.
- RRC_Connected state: state in which a radio connection (RRC connection) has been established between a base station and a UE.

DRX is basically divided into Idle mode DRX, Connected DRX (C-DRX) and extended DRX. DRX applied in the RRC IDLE state is called Idle mode DRX, and DRX applied in the RRC CONNECTED state is called Connected mode DRX (C-DRX).

eDRX (Extended/enhanced DRX) is a mechanism capable of expanding the cycle of Idle mode DRX and C-DRX. In the Idle mode DRX, whether to permit eDRX may be configured based on system information (e.g., SIB1).

The SIB 1 may include an eDRX-Allowed parameter. The eDRX-Allowed parameter is a parameter indicating whether Idle mode extended DRX is permitted.

### (1) IDLE Mode DRX

In the IDLE mode, the UE may use DRX to reduce power consumption. One paging occasion (PO) may be a time interval (e.g., a slot or a subframe) in which a paging-radio network temporary identifier (P-RNTI) based physical downlink control channel (PDCCH) may be transmitted. The P-RNTI-based PDCCH may address/schedule a paging message. For P-RNTI-based PDCCH transmission, the PO may indicate a first subframe for PDCCH repetition.

One paging frame (PF) is one radio frame which may include one or a plurality of paging occasions. When DRX is used, a UE may be configured to monitor only one PO per DRX cycle. The PF, PO and/or PNB may be determined based on a DRX parameter provided via network signaling (e.g., system information).

Hereafter, 'PDCCH' may refer to MPDCCH, NPDCCH and/or normal PDCCH. Hereafter, 'UE' may refer to MTC UE, BL (Bandwidth reduced Low complexity)/CE (coverage enhanced) UE, NB-IoT UE, Reduced Capability (RedCap) UE, normal UE and/or IAB-MT (mobile termination).

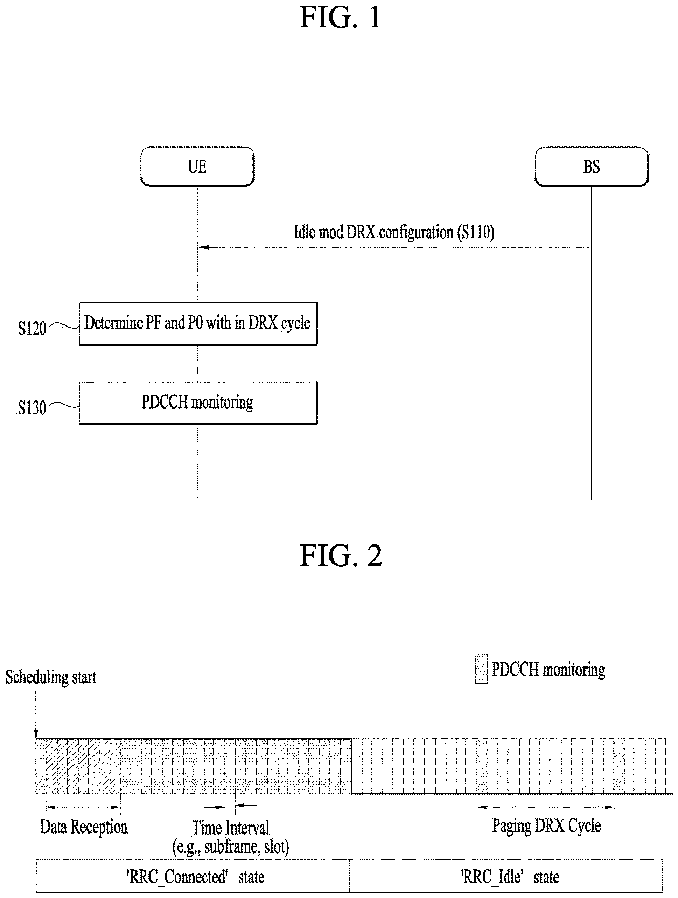

FIG. 1 is a flowchart showing an example of a method of performing an Idle mode DRX operation.

A UE receives, from a base station, Idle mode DRX configuration information through a higher layer signaling (e.g., system information) (S110).

Furthermore, the UE determines a PF (Paging Frame) and a PO (Paging Occasion), for monitoring a physical downlink control channel (e.g., PDCCH) in a paging DRX cycle based on the Idle mode DRX configuration information (S120). In this case, the DRX cycle includes On Duration and sleep duration (or Opportunity for DRX).

Furthermore, the UE monitors a PDCCH in the PO of the determined PF (S130). The UE monitors only one time interval (PO) for each paging DRX cycle. For example, the time interval may be a slot or a subframe.

Additionally, if the UE receives a PDCCH (more exactly, CRC of PDCCH) scrambled by a P-RNTI during On duration (i.e., if paging is detected), the UE may transit to a connected mode and transmit or receive data with the base station.

FIG. 2 is a diagram showing an example of an Idle mode DRX operation.

Referring to FIG. 2, if there is a traffic (data) toward a UE in the RRC_Idle state (hereinafter referred to as `Idle state'), paging occurs toward the corresponding UE.

Thus, the UE wakes up every (paging) DRX cycle and monitors a PDCCH.

If Paging is present, the UE transits to a Connected state, and receives data. Otherwise, the UE may enter a sleep mode again.

### (2) Connected Mode DRX (C-DRX)

C-DRX is DRX applied in the RRC Connected state. The DRX cycle of C-DRX may be configured with a Short DRX cycle and/or a Long DRX cycle. The Short DRX cycle is Optional.

If C-DRX is configured, a UE performs PDCCH monitoring for On Duration. If there is a PDCCH successfully detected during the PDCCH monitoring, the UE operates (or runs) an inactivity timer and maintains an awake state. In contrast, if there is no PDCCH successfully detected during the PDCCH monitoring, the UE enters to a sleep state after the On Duration is ended.

If C-DRX is configured, a PDCCH reception occasion (e.g., a slot having a PDCCH search space/candidate) may be configured discontiguously based on a C-DRX configuration. In contrast, if C-DRX is not configured, a PDCCH reception occasion (e.g., a slot having a PDCCH search space/candidate) may be configured contiguously in accordance with PDCCH search space configuration. Meanwhile, PDCCH monitoring may be limited in a time interval configured as a measurement gap, regardless of a C-DRX configuration.

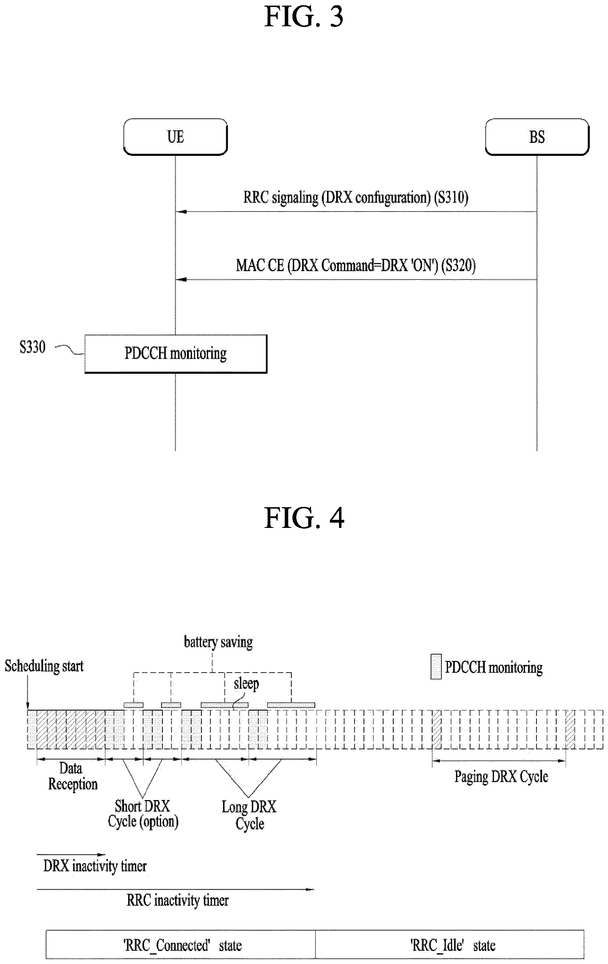

FIG. 3 is a flowchart showing an example of a method of performing a C-DRX operation.

A UE receives, from a base station, RRC signalling (e.g., MAC-MainConfig IE) including DRX configuration information (S310). The DRX configuration information may include the following information.
- on-duration: the duration that the UE waits for, after waking up, to receive PDCCHs. If the UE successfully decodes a PDCCH, the UE stays awake and starts the drx-inactivity timer;
- onDurationTimer: the duration in which the DRX cycle starts. For example, the duration may refer to a time interval to be continuously monitored at the beginning of a DRX cycle, which may be represented in units of milliseconds (ms).
- drx-InactivityTimer: the duration after the PDCCH occasion in which a PDCCH indicates a new UL or DL transmission for the MAC entity. For example, the duration may be a time interval represented in units of ms after the UE decodes the PDCCH including scheduling information. That is, the duration refers to a duration in which the UE waits to successfully decode another PDCCH after decoding the PDCCH. If no other PDCCHs are detected within the corresponding duration, the UE transitions to the sleep mode.

The UE restarts the drx-inactivity timer after successfully decoding a PDCCH for initial transmission only except for a PDCCH for retransmission.
- drx-RetransmissionTimer: for DL, the maximum duration until a DL retransmission is received; for UL the maximum duration until a grant for UL retransmission is received. For example, for UL, drx-RetransmissionTimer indicates the number of slots in a bandwidth part (BWP) where a transport block (TB) to be retransmitted is transmitted. For DL, drx-RetransmissionTimer indicates the number of slots in a BWP in which a TB to be retransmitted is received.
- longDRX-Cycle: On Duration occurrence period
- drxStartOffset: a subframe number in which a DRX cycle is started
- drxShortCycleTimer: the duration the UE shall follow the Short DRX cycle;
- shortDRX-Cycle: a DRX Cycle operating as much as a drxShortCycleTimer number when Drx-InactivityTimer is terminated
- drx-SlotOffset: the delay before drx-onDurationTimer starts. For example, the delay may be expressed in units of ms, and more particularly, in multiples of 1/32 ms.
- Active time: total duration that the UE monitors PDCCH, which may include (a) the "on-duration" of the DRX cycle, (b) the time UE is performing continuous reception while the drx-inactivity timer has not expired, and (c) the time when the UE is performing continuous reception while waiting for a retransmission opportunity.

Specifically, when the DRX cycle is configured, an active time for a serving cell of a DRX group includes the following.
- (a) drx-onDurationTimer or (b) drx-InactivityTimer configured for the DRX group is running; or
- (c) drx-RetransmissionTimerDL or drx-RetransmissionTimerUL is running on any Serving Cell in the DRX group; or
- (d) ra-ContentionResolutionTimer or msgB-ResponseWindow is running; or
- (e) a Scheduling Request is sent on PUCCH and is pending; or
- (f) a PDCCH indicating a new transmission addressed to the C-RNTI of the MAC entity has not been received after successful reception of a Random Access Response for the Random Access Preamble not selected by the MAC entity among the contention-based Random Access Preamble.

Furthermore, if DRX 'ON' is configured through the DRX command of a MAC CE (command element) (S320), the UE monitors a PDCCH for the ON duration of a DRX cycle based on the DRX configuration (S330).

FIG. 4 is a diagram showing an example of a C-DRX operation.

Referring to FIG. 4 when the UE receives scheduling information (e.g., DL assignment or UL grant) in the RRC_Connected state (hereinafter referred to as the connected state), the UE runs a DRX inactivity timer and an RRC inactivity timer.

After the DRX inactivity timer expires, a DRX mode starts. The UE wakes up in a DRX cycle and monitors a PDCCH during a predetermined time (on duration timer).

In this case, if Short DRX is configured, when the UE starts the DRX mode, the UE first starts in a short DRX cycle, and starts to a long DRX cycle after the short DRX cycle is terminated. The Long DRX cycle is a multiple of the short DRX cycle. In the short DRX cycle, the UE wakes up more frequently. After the RRC inactivity timer expires, the UE shifts to an Idle state and performs an Idle mode DRX operation.

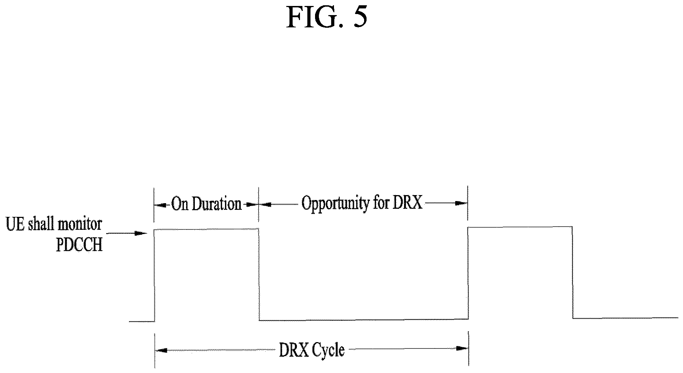

FIG. 5 illustrates a DRX cycle. The C-DRX operation has been introduced for power saving of the UE. If the UE receives no PDCCH within the on-duration defined for each DRX cycle, the UE enters the sleep mode until the next DRX cycle and does not perform transmission/reception.

On the other hand, when the UE receives a PDCCH within the on-duration, the active time may continue (or increase) based on the operations of an inactivity timer, a retransmission timer, etc. If the UE receives no additional data within the active time, the UE may operate in the sleep mode until the next DRX operation.

In NR, a wake-up signal (WUS) has been introduced to obtain additional power saving gain in addition to the existing C-DRX operation. The WUS may be to inform whether the UE needs to perform PDCCH monitoring within the on-duration of each DRX cycle (or a plurality of DRX cycles). If the UE detects no WUS on a specified or indicated WUS occasion, the UE may maintain the sleep mode without performing PDCCH monitoring in one or more DRX cycles associated with the corresponding WUS.

### (3) WUS (DCI Format 2_6)

According to the power saving technology of Rel-16 NR systems, when the DRX operation is performed, it is possible to inform the UE whether the UE needs to wake up for each DRX cycle by DCI format 2_6.

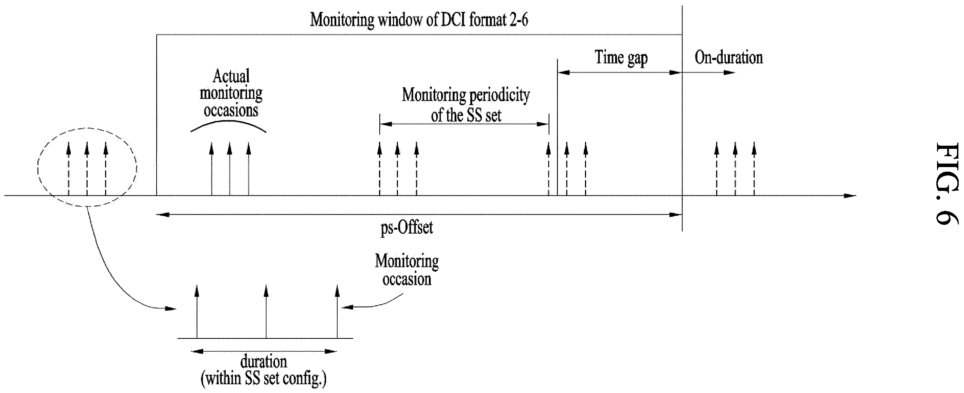

Referring to FIG. 6, a PDCCH monitoring occasion for DCI format 2_6 may be determined by ps-Offset indicated by the network and a time gap reported by the UE. In this case, the time gap reported by the UE may be interpreted as a preparation period necessary for an operation after the UE wakes up.

Referring to FIG. 6, the base station (BS) may provide the UE with a search space (SS) set configuration capable of monitoring DCI format 2_6. According to the corresponding SS set configuration, DCI format 2_6 may be monitored in consecutive slots as long as the duration at the monitoring periodicity interval.

In the DRX configuration, a monitoring window for monitoring DCI format 2_6 may be determined by the start time of the DRX cycle (e.g., a point where the on-duration timer starts) and ps-Offset configured by the BS. In addition, PDCCH monitoring may not be required in the time gap reported by the UE. Consequently, an SS set monitoring occasion on which the UE actually performs monitoring may be determined as a first full duration (i.e., actual monitoring occasions of FIG. 6) within the monitoring window.

If the UE detects DCI format 2_6 in the monitoring window configured based on ps-Offset, the UE may be informed by the BS whether the UE wakes up in the next DRX cycle.

### Search Space Set (SS Set) Group Switching

In the current NR standards, the SS set group switching has been defined to reduce the power consumption of the UE. According to the SS set group switching, the UE may be configured with a plurality of SS set groups, and an SS set group to be monitored by the UE among the plurality of SS set groups may be indicated. In addition, the UE may monitor an SS set included in the corresponding SS set group according to the corresponding indication and skip monitoring of SS sets not included in the corresponding SS set group.

For example, the UE may be provided with a list of SS set groups configured with a Type 3-PDCCH common search space (CSS) set and/or a user-specific search space (USS) set. In addition, if a list of SS set groups is provided, the UE may monitor SS sets corresponding to group index #0.

The UE may perform the SS set group switching operation depending on whether SearchSpaceSwitchTrigger is configured.

If SearchSpaceSwitchTrigger is configured for the UE, the UE may switch the SS set group according to the indication of DCI format 2_0.

For example, if the value of an SS Set Group Switching Flag field in DCI format 2_0 is 0, the UE may start monitoring SS set group #0 after a predetermined time from the time when the UE receives DCI format 2_0 and stop monitoring SS set group #1.

If the value of the SS Set Group Switching Flag field in DCI format 2_0 is 1, the UE may start monitoring SS set group #1 after a predetermined time from the time when the UE receives DCI format 2_0 and stop monitoring SS set group #0. If the UE starts monitoring SS set group #1, the UE may start counting a timer configured by SearchSpaceSwitchTimer. If the timer expires, the UE may start monitoring SS set group #0 after a predetermined time from the time when the timer expires and stop monitoring SS set group #1.

If SearchSpaceSwitchTrigger is not configured for the UE, the UE may change the SS set group based on DCI reception. For example, when the UE receives the DCI while monitoring SS set group #0 (or SS set group #1), the UE may start monitoring SS set group #1 (or SS set group #0) after a predetermined time from the time when the UE receives the DCI and stop monitoring SS set group #0 (or SS set group #1). In this case, the UE may start counting the timer configured by SearchSpaceSwitchTimer. If the timer expires, the UE may start monitoring SS set group #0 (or SS set group #1) after a predetermined time from the time when the timer expires and stop monitoring SS set group #1 (or SS set group #0).

The UE may start monitoring SS set group #0 (or SS set group #1) after the predetermined time from the time when the UE receives DCI format 2_0 as described above. In this case, monitoring SS set group #0 (or SS set group #1) after the predetermined time may mean that monitoring of SS set group #0 (or SS set group #1) may start from the first slot (or applicable slot boundary) after at least P_{switch} symbols from the last symbol of the PDCCH including the received DCI. This is because the UE may require a prescribed time to decode the DCI, confirm an SS set group switching indication, and perform an SS set group switching operation actually.

In this case, P_{switch} may be configured by RRC signaling. Based on the smallest subcarrier spacing (SCS) (u) among SCSs of all DL BWPs configured for the capability and serving cell (or a set of serving cell) of the UE, the minimum P_{switch} value may be defined as shown in Table 1 below.

**[Table 1]**

| u | Minimum P_{switch} value for UE processing capability 1 [symbols] | Minimum P_{switch} value for UE processing capability 2 [symbols] |
|---|---|---|
| 0 | 25 | 10 |
| 1 | 25 | 12 |
| 2 | 25 | 22 |

### Physical Downlink Control Channel (PDCCH)

A PDCCH carries downlink control information (DCI). For example, the PDCCH (i.e., DCI) may carry: transmission formats and resource allocation of a downlink shared channel (DL-SCH); resource allocation information on an uplink shared channel (UL-SCH); paging information on a paging channel (PCH); system information on a DL-SCH; resource allocation information on a higher layer control message such as a random access response transmitted over a physical downlink shared channel (PDSCH); transmit power control commands; and activation/deactivation of configured scheduling (CS). The DCI includes a cyclic redundancy check (CRC), and the CRC is masked/scrambled with various identifiers (e.g., radio network temporary identifier (RNTI)) according to the owner or use purpose of the PDCCH. For example, if the PDCCH is for a specific UE, the CRC is masked with a UE ID (e.g., cell-RNTI (C-RNTI)). If the PDCCH is for paging, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

For PDCCH reception, the UE may monitor (e.g., blind decoding) a set of PDCCH candidates in a CORESET. A PDCCH candidate may mean CCE(s) monitored by the UE for PDCCH reception/detection. PDCCH monitoring may be performed on one or more CORESETs in an active DL BWP on each active cell in which the PDCCH monitoring is configured. The set of PDCCH candidates monitored by the UE may be defined as a PDCCH search space (SS) set. The SS set may be divided into a common search space (CSS) set or a UE-specific search space (USS) set.

The UE may monitor PDCCH candidates in one or more SS sets in a slot according to CORESET/SS set configurations. An occasion (e.g., time/frequency resource) to monitor PDCCH candidates is defined as a PDCCH (monitoring) occasion. One or more PDCCH (monitoring) occasions may be configured within a slot.

Table 2 shows DCI formats transmitted over a PDCCH.

**[Table 2]**

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group based (CBG-based) (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1 0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs. DCI format 0_0 and DCI format 1_0 may be referred to as fallback DCI formats, whereas DCI format 0_1 and DCI format 1_1 may be referred to as non-fallback DCI formats. The fallback DCI formats maintain the same DCI size/field configuration regardless of UE configurations. In contrast, non-fallback DCI formats have different DCI size/field configurations depending on the UE configurations.

The embodiments described below may be applied to, for example, extended reality (XR). XR is a concept that encompasses augmented reality (AR), virtual reality (VR), and mixed reality (MR). According to the features of XR, the time when traffic is expected to be received is fixed by frame per second (FPS), and due to the effect of jitter, the expected reception time may be delayed or advanced. The jitter of XR traffic appears as a truncated Gaussian probability distribution. Therefore, the power saving effect may be expected by periodically configuring DRX according to FPS. In addition, if PDCCH monitoring adaptation is configured even though no DRX is configured, the power saving effect may be expected only by the PDCCH monitoring adaptation. The power saving effect may be expected by configuring both the DRX and PDCCH monitoring adaptation.

The expected time of receiving traffic and the expected time of receiving in consideration of the effect of jitter may be expressed as a probability, and the following embodiments are applicable to achieve the power saving effect in the XR environment as described above.

As an example, as the probability of jitter decreases at a point in time that is relatively far from the expected time of receiving traffic, the reception probability decreases. Thus, the UE may sparsely monitor PDCCHs for power saving. On the other hand, as the probability of jitter increases at a point in time close to the expected time of receiving traffic, the reception probability increases. The UE may densely monitor PDCCHs to adjust the power consumption depending on the reception probability. To this end, an SS set group including SS sets for dense PDCCH monitoring may be set to SS set group #0, and an SS set group including SS sets for sparse PDCCH monitoring may be set to SS set group #1. In other words, the SS set group switching operation may be configured for XR in consideration of jitter.

As another example, the UE may perform PDCCH monitoring during a short period with a high probability of receiving traffic due to a high probability of jitter and then repeat a micro-sleep operation. Accordingly, when the UE does not normally receive traffic, the UE may expect the power saving effect by performing the micro-sleep operation quickly. Then, the UE may perform PDCCH monitoring to receive retransmitted traffic, thereby increasing the efficiency of the PDCCH monitoring. In other words, the PDCCH monitoring skipping operation may be configured for XR in consideration of jitter.

While the present disclosure proposes operations based on DCI reception within a DRX active time as an example, the operations may be equally applied when the UE is configured with no DRX.

The present disclosure proposes methods by which the UE is configured/instructed with different PDCCH monitoring adaptation for each DCI format and performs PDCCH monitoring based on the PDCCH monitoring adaptation.

The UE may be configured with a maximum of 10 SS sets per BWP. The UE may monitor PDCCH candidates included in the SS sets (hereinafter referred to as SS set monitoring).

Considering that the UE needs to perform blind decoding (BD) on a PDCCH as the UE does not know at which point in time and in which DCI format the PDCCH will be received, PDCCH monitoring during the DRX operation accounts for a significant portion of power consumption.

As a technology for power saving in wireless communication systems (e.g., Rel-17 NR system), there is discussion about PDCCH monitoring adaptation, which involves adjusting the frequency of PDCCH monitoring performed by the UE during the DRX active time to reduce power consumption. In general, PDCCH monitoring adaptation may mean an operation for reducing the frequency of times of PDCCH monitoring.

As an example of the PDCCH monitoring adaptation, PDCCH monitoring skipping (hereinafter, skipping) and SS set group switching (hereinafter, switching) are considered.

The PDCCH monitoring skipping means stopping PDCCH monitoring for a predetermined duration (e.g., PDCCH monitoring skipping duration). The SS set group (SSSG) switching means dividing configured SS sets into a plurality of groups, indicating switching to one group among the plurality of groups according to the purpose of use, and then monitoring SS sets included in the corresponding group.

For PDCCH monitoring adaptation, the BS may use various DCI formats to indicate information related to the PDCCH monitoring adaptation to the UE.

The configuration of a bit field in scheduling DCI for a PDCCH monitoring adaptation indication may be up to two bits. In addition, upon receiving the PDCCH monitoring adaptation instruction, the UE may operate as shown in Table 3.

**[Table 3]**

| |
|---|
| ... |
| UE behavior after receiving PDCCH indication of monitoring adaptation can be one of the followings, |
| Working Assumption: Beh 1: PDCCH skipping is not activated |
| 1) Beh 1A: PDCCH skipping means stopping PDCCH monitoring for a duration X |
| FFS the possible values for X |
| FFS: Whether and how to support more than one skipping duration(s) |
| FFS: whether to continue monitoring PDCCH scrambled by C-RNTI for Type 0/1/1A/2 CSS or not |
| Beh 2: stop monitoring SS sets associated with SSSG#1 and SSSG#2 (if confirmed) and monitoring of SS sets associated to SSSG#0 (legacy behaviour) |
| Beh 2A: stop monitoring SS sets associated with SSSG#0 and SSSG#2 (if confirmed) and monitoring of SS sets associated to SSSG#1 (legacy behaviour) |
| Working Assumption: Beh 2B(if confirmed): stop monitoring SS sets associated with SSSG#0 and SSSG#1 and monitoring of SS sets associated to SSSG#2 (if confirmed) |
| ... |

Table 3 shows the operations of the UE as part of the agreement in RAN1#106-e. In RAN1#106-e, the SSSG switching and PDCCH monitoring skipping, which have been discussed as UE operations for PDCCH monitoring adaptation, are categorized and described by behavior. In other words, Table 3 illustrates how the UE operates based on DCI indicating PDCCH monitoring adaptation after receiving the DCI. In the present disclosure, the proposed methods will be described by assuming the following cases: when the UE is configured with only SSSG switching, when the UE is configured with only PDCCH monitoring skipping, and when the UE is configured with both SSSG switching and PDCCH monitoring skipping. When the UE is configured with only either SSSG switching or PDCCH monitoring skipping, PDCCH monitoring adaptation that the UE is capable of supporting is one of the SSSG switching and PDCCH monitoring skipping. Alternatively, the PDCCH monitoring adaptation may be configured based on the UE capability.

For example, if a capability parameter such as MonitoringAdaptationCapability = {switching, skipping, both} is configured, the parameter may indicate that the UE is capable of supporting only one of the SSSG switching or PDCCH monitoring skipping or supporting both the SSSG switching and PDCCH monitoring skipping (e.g., in the case of both). If both the SSSG switching and PDCCH monitoring skipping are supported, the BS may configure the UE to perform the PDCCH monitoring adaptation based on one or both of SSSG switching and PDCCH monitoring skipping based on either or both of the SSSG switching and PDCCH monitoring skipping.

In Table 3, Beh 1 and Beh 1A represent UE operations related to PDCCH monitoring skipping, and Beh 2, Beh 2A, and Beh 2B represent UE operations related to SSSG switching. However, since Beh 1 and Beh 2B are working assumption, Beh 1 and Beh 2B are subject to change. Beh 1 may vary depending on the PDCCH monitoring adaptation configured to the UE. Beh 1 corresponds to an operation in which the UE does not activate PDCCH monitoring skipping after receiving DCI including a PDCCH monitoring adaptation indication. The definition of the operation in which PDCCH monitoring skipping is not activated (for example, Beh 1) may be interpreted in various ways, examples of which may be as follows.

For example, if the UE is monitoring a specific SSSG according to SSSG switching before Beh 1 is indicated, the UE may continue to monitor the currently monitored SSSG or monitor a default SSSG (e.g., SSSG #0) after Beh 1 is indicated.

Alternatively, if PDCCH monitoring skipping is instructed before Beh 1 is indicated, and thus the UE is already performing the PDCCH monitoring skipping, the UE may skip PDCCH monitoring until the current PDCCH monitoring skipping duration without additional PDCCH monitoring skipping after Beh 1 is indicated. Alternatively, even if the current PDCCH monitoring skipping duration does not end, the UE may stop the current PDCCH monitoring skipping at the time Beh 1 is indicated and then resume PDCCH monitoring.

Beh 1 may change depending on the PDCCH monitoring adaptation operation that the UE is capable of supporting. For example, Beh 1 may vary depending on each case: (i) when the UE supports only SSSG switching, (ii) when the UE supports only PDCCH monitoring skipping, and (iii) when the UE supports both SSSG switching and PDCCH monitoring skipping.

PDCCH monitoring adaptation operations of the UE for each behavior listed in Table 3 may be summarized as shown in Table 4 below.

**[Table 4]**

| Behavior | PDCCH monitoring adaptation operation |
|---|---|
| Beh 1 | Disable PDCCH monitoring skipping. |
| Beh 1A | Stop PDCCH monitoring during X. |
| Beh 2 | Stop monitoring SS sets associated with SSSG #1 and/or SSSG #2 and start monitoring SS sets associated with SSSG #0. |
| Beh 2A | Stop monitoring SS sets associated with SSSG #0 and/or SSSG #2 and start monitoring SS sets associated with SSSG #1. |
| Beh 2B | Stop monitoring SS sets associated with SSSG #0 and/or SSSG #1 and start monitoring SS sets associated with SSSG #2. |

Unless otherwise specified in the present disclosure, each behavior may be interpreted to operate as shown in Table 4. However, as described above, the specific operations of Beh 1 and Beh 2B may be subject to future changes. In addition, possible values of X in Beh 1A, that is, whether multiple X values are supported, and/or the type of SS set subject to Beh 1A may vary depending on specific implementations of the methods described below. For example, X may not be a fixed value, and there may be multiple candidate values for X. These candidate values may be configured to the UE via a higher layer signal (e.g., RRC layer signal).

The present disclosure proposes the composition and composition methods, constraints, configuration methods, and actual UE operations for fields indicating PDCCH monitoring adaptation of the UE for each DCI format based on the agreement of RAN#106-e. The methods proposed in the present disclosure includes methods of configuring fields indicating PDCCH monitoring adaptation depending on DCI formats and UE operations upon receiving the corresponding DCI formats. The methods may allow the BS to adjust the frequency of PDCCH monitoring while improving the power consumption efficiency of the UE.

Although the methods proposed in the present disclosure are described based on C-DRX applied to the UE in the RRC_CONNECTED state, the present disclosure is not limited thereto. For instance, it may be understood by those skilled in the art that the methods may be applied to other methods where a specific duration in which the UE does not need to expect reception of DL signals is defined with periodicity (for example, DRX applied to the UE in the RRC_IDLE state)

Thus, it is evident that unless specified otherwise, the methods proposed in the present disclosure are applicable to various types of transmission and reception methods expected by both the BS and UE as long as the principles of the proposed methods are not violated. Throughout this specification, the term "DRX" is used as a general concept encompassing the terms "C-DRX."

While the present disclosure describes the principles of the proposed methods based on the NR system, the proposed methods are not limited to NR transmission and reception formats unless otherwise specified. The present disclosure provides examples based on the characteristics and structure of the UE supporting C-DRX to explain the principles of the proposed methods, the proposed methods are not limited to the UE supporting C-DRX unless otherwise specified. Therefore, the methods proposed in the present disclosure may be applied to the structure and services of all wireless communication transmission and reception unless the principles of the proposed methods are violated.

In the following description, the classification of methods or options is intended to clarify the description, and the classification is not limitedly interpreted to mean that each should be practiced independently. For example, although each of the methods/options described below may be independently implemented, but at least some of the methods/options may be combined to the extent that they do not conflict with each other.

In the present disclosure, the BS may configure a field in DCI to indicate PDCCH monitoring adaptation to the UE in the RRC_CONNECTED state and transmit the DCI to instruct/configure the PDCCH monitoring adaptation operation to the UE. Accordingly, the power saving efficiency of the UE may be improved, and the latency of transmission and reception of control/traffic information may be reduced.

According to the proposed methods, the UE may receive information on the PDCCH monitoring adaptation operation from the BS. For example, the information may include an indication of the PDCCH monitoring adaptation operation and UE operations upon receiving DCI (e.g., UE operations when an operation related to PDCCH monitoring adaptation is indicated/configured).

The BS may configure a PDCCH monitoring adaptation indication field for each DCI format. For example, the BS may determine and configure information on UE operations when the UE monitors DCI and then inform the UE of the UE operations. Based on this information, the BS or UE may determine the transmission and reception locations of a PDCCH, PDSCH, and or physical uplink shared channel (PUSCH). Furthermore, the proposed methods may involve processes in which the UE transmits a signal and channel to inform the capability of the UE and the BS receives the signal and channel.

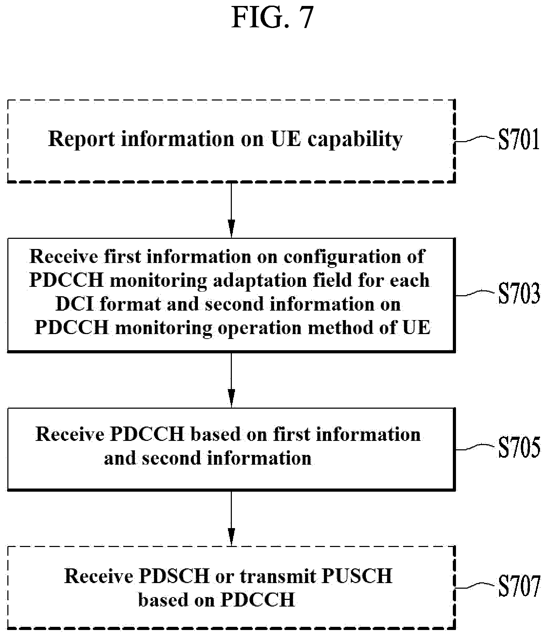

Hereinafter, overall operation processes in which the UE and BS transmit and receive a PDSCH according to the methods proposed in the present disclosure will be described with reference to FIGS. 7 to 9

FIG. 7 is a diagram for explaining an overall operation process for the UE to receive a PDSCH according to the methods proposed in the present disclosure.

To support the operations proposed in the present disclosure, the UE may report information on the UE capability to the BS (S701). The capability information may include capability information indicating whether SSSG switching and/or PDCCH monitoring skipping are supported. S701 may be omitted in specific cases (for example, when the BS already has the information or when each operation method is modified due to the needs of the BS).

To support the operations proposed in the present disclosure, the UE may monitor and receive first information on the configuration of a PDCCH monitoring adaptation indication field for each DCI format and second information on a PDCCH monitoring operation method of the UE upon receiving a DCI format (S703). In this case, the first information and the second information may be received separately or received together in common configuration information. For example, the first information, second information, and/or configuration information may be received via a higher layer signal (e.g., SIB or RRC signaling). Alternatively, the UE may receive DCI including the first information, second information, and/or configuration information based on information received through a higher layer. In other words, one of the configurations of PDCCH monitoring adaptation indication fields based on a plurality of DCI formats, which are provided (semi-)statically to the UE, and the configurations related to the PDCCH monitoring operation may be received through specific means (for example, DCI or MAC CE/header).

Based on the first information, second information, and/or configuration information, which are related to the configuration of the PDCCH monitoring adaptation indication field based on the DCI format and the PDCCH monitoring operation, the UE may expect the timing of PDCCH reception and the PDCCH monitoring adaptation operation based on the DCI format. The UE may receive and decode a PDCCH at the location of the corresponding reception timing and perform the indicated PDCCH monitoring adaptation operation (S705).

The UE may receive a PDSCH or transmit a PUSCH based on the received PDCCH (S707). However, if the DCI included in the received PDCCH is non-scheduling DCI, S707 may be omitted, and the UE may perform operations indicated by the DCI.

The specific UE operations in S703 and S705 may be based on at least one of [Method 1] to [Method 4].

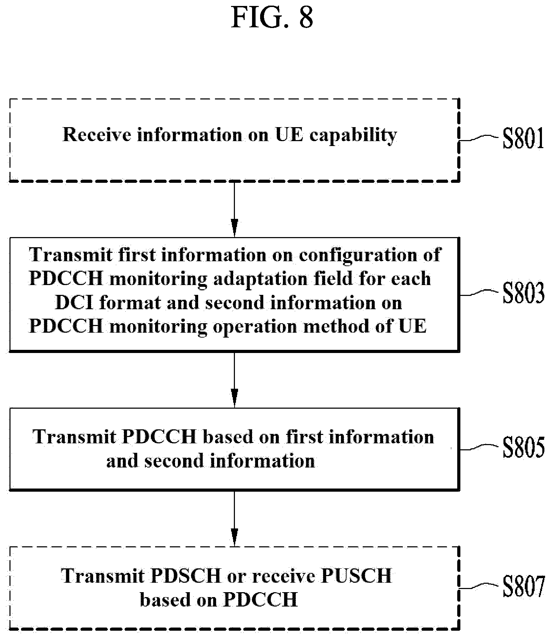

FIG. 8 is a diagram for explaining an overall operation process for the BS to transmit a PDSCH according to the methods proposed in the present disclosure.

To support the operations proposed in the present disclosure, the BS may receive information on the capability of the UE from the UE (S801). The capability information may include capability information indicating whether SSSG switching and/or PDCCH monitoring skipping are supported. S801 may be omitted in specific cases (for example, when the BS already has the information or when each operation method is modified due to the needs of the BS).

To support the operations proposed in the present disclosure, the BS may transmit first information on the configuration of a PDCCH monitoring adaptation indication field for each DCI format and second information on a PDCCH monitoring operation method of the UE upon receiving a DCI format (S803). In this case, the first information and the second information may be transmitted separately or transmitted together in common configuration information. For example, the first information, second information, and/or configuration information may be transmitted via a higher layer signal (e.g., SIB or RRC signaling). Alternatively, the BS may transmit DCI including the first information, second information, and/or configuration information based on information transmitted through a higher layer. In other words, one of the configurations of PDCCH monitoring adaptation indication fields based on a plurality of DCI formats, which are provided (semi-)statically by the BS to the UE, and the configurations related to the PDCCH monitoring operation may be transmitted through specific means (for example, DCI or MAC CE/header).

Based on the first information, second information, and/or configuration information, which are related to the configuration of the PDCCH monitoring adaptation indication field based on the DCI format and the PDCCH monitoring operation, the BS may determine the timing of PDCCH transmission and the DCI format and then transmit a PDCCH at the location of the corresponding transmission timing (S805).

The BS may transmit a PDSCH or receive a PUSCH based on the transmitted PDCCH (S807). However, if the DCI included in the transmitted PDCCH is non-scheduling DCI, S807 may be omitted.

The specific BS operations in S803 and S805 may be based on at least one of [Method 1] to [Method 4].

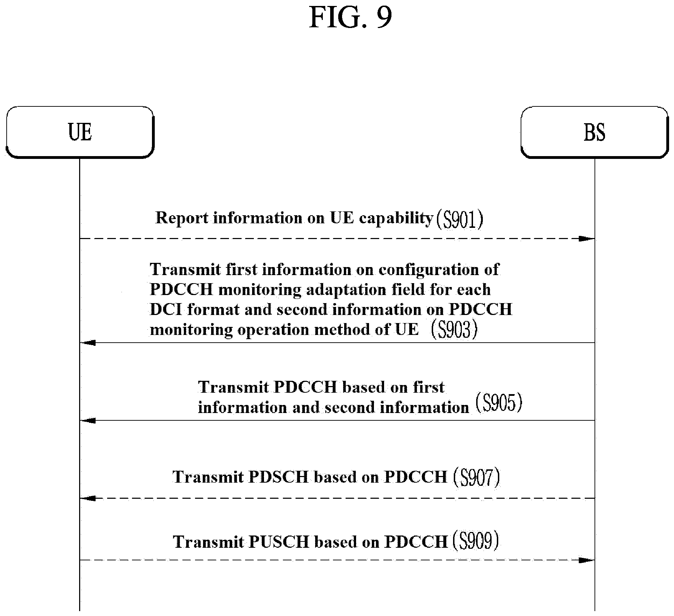

FIG. 9 is a diagram for explaining an overall operation process of a network according to the methods proposed in the present disclosure.

To support the operations proposed in the present disclosure, the UE may report information on the capability of the UE to the BS (S901). The capability information may include capability information indicating whether SSSG switching and/or PDCCH monitoring skipping are supported. S901 may be omitted in specific cases (for example, when the BS already has the information or when each operation method is modified due to the needs of the BS).

To support the operations proposed in the present disclosure, the BS may monitor and transmit first information on the configuration of a PDCCH monitoring adaptation indication field for each DCI format and second information on a PDCCH monitoring operation method of the UE upon receiving a DCI format (S903). In this case, the first information and the second information may be transmitted separately or transmitted together in common configuration information. For example, the first information, second information, and/or configuration information may be transmitted via a higher layer signal (e.g., SIB or RRC signaling). Alternatively, the BS may transmit DCI including the first information, second information, and/or configuration information based on information transmitted through a higher layer. In other words, one of the configurations of PDCCH monitoring adaptation indication fields based on a plurality of DCI formats, which are provided (semi-) statically by the BS to the UE, and the configurations related to the PDCCH monitoring operation may be transmitted through specific means (for example, DCI or MAC CE/header).

Based on the first information, second information, and/or configuration information, which are related to the configuration of the PDCCH monitoring adaptation indication field based on the DCI format and the PDCCH monitoring operation, the BS may determine the timing of PDCCH transmission and the DCI format and then transmit a PDCCH at the location of the corresponding transmission timing (S905).

The BS may transmit a PDSCH or receive a PUSCH based on the transmitted PDCCH, and the UE may receive the PDSCH or transmit the PUSCH based on the PDCCH (S907 to S909). However, if the DCI included in the transmitted PDCCH is non-scheduling DCI, S907 to S909may be omitted.

The specific BS and UE operations in S903 and S905 may be based on at least one of [Method 1] to [Method 4].

In other words, the methods proposed in the present disclosure may be applied by selecting some of the following methods. Each method may operate independently without any combinations, or one or more methods may operate in combination. Some of the terms, symbols, and orders used herein to describe the present disclosure may be replaced with other terms, symbols, and orders as long as the principles of the present disclosure are maintained.

Hereinafter, the principles of the methods proposed in the present disclosure will be described by providing illustrative examples of configurations of PDCCH monitoring adaptation indication fields in DCI formats of the UE. However, unless otherwise stated, the proposed methods are not limited to the type of UE operation.

Therefore, it is evident that unless specified otherwise, the methods proposed in the present disclosure are applicable to any PDCCH monitoring based on DCI transmission and reception as long as the principles of the proposed methods are not violated.

In the present disclosure, it is assumed that while the UE is performing the DRX operation, if PDCCH monitoring adaptation (e.g., SS set group switching and/or PDCCH monitoring skipping) is instructed by the BS, the UE performs the corresponding PDCCH monitoring adaptation. In this case, SS set group switching refers to reducing the number of monitored SS sets by a certain portion rather than all of the monitored SS sets, and PDCCH monitoring skipping refers to stopping PDCCH monitoring for a certain period of time.

For example, for SS set group switching, two SS set groups consisting of SS sets may be defined. In this case, each SS set group may generally include a smaller number of SS sets than the number of SS sets configurable in one BWP of the UE. The UE is instructed to monitor only one SS set group of the two SS set groups. Compared to monitoring all SS sets configurable in one BWP of a NR UE, the power saving effect may be achieved because the UE monitors fewer SS sets. However, two SS set groups do not need to be configured to the UE, and three or more SS set groups may be configured depending on the configuration.

In addition, PDCCH monitoring skipping refers to stopping PDCCH monitoring during a specific duration indicated to the UE. The PDCCH monitoring skipping duration of the UE may be set to one or more symbols or one or more slots, or the PDCCH monitoring skipping duration may be set until the next DRX cycle. Based on the PDCCH monitoring skipping operation, the UE may achieve the power-saving effect and the micro-sleep effect by temporarily stopping PDCCH monitoring.

The present disclosure proposes methods of configuring a PDCCH monitoring adaptation indication field in DCI indicating PDCCH monitoring adaptation to the UE. Based on the configuration and combination of various PDCCH monitoring adaptation indication fields, it is possible to adjust the frequency of PDCCH monitoring while improving the power consumption efficiency of the UE.

In addition, there are provided methods of categorizing and configuring the configurations of PDCCH monitoring adaptation indication fields proposed in the present disclosure for each DCI format. Further, there are also provided UE operations when multiple DCIs, which are configured in a complex manner, are transmitted simultaneously.

### [Method 1] Method of configuring field of up to two bits to indicate PDCCH monitoring adaptation

As described above, a PDCCH monitoring adaptation indication field of DCI (e.g., DCI including scheduling information) capable of indicating PDCCH monitoring adaptation may be composed of up to two bits. In [Method 1], there are provided methods of configuring the PDCCH monitoring adaptation indication field with either one or two bits.

The BS may indicate/configure the following proposed methods to the UE. The following methods may be configured as follows: one or more of the proposed methods are configured by higher layer parameters to operate either individually or in combination. Alternatively, after a plurality of methods are configured by higher layer parameters, one of the methods may be selected and indicated by DCI and/or MAC CE.

### [Method 1-1] Method of configuring two-bit field.

### 1. Case 1-1

In Case 1-1, when the UE is configured with both the SSSG switching and PDCCH monitoring skipping, the PDCCH monitoring adaptation indication field may be configured to indicate both the SSSG switching and PDCCH monitoring skipping jointly. Table 5 below shows exemplary bit mapping of two bits.

**[Table 5]**

| Bit value | Behavior |
|---|---|
| 00 | Beh 1 |
| 01 | Beh 1A |
| 10 | Beh 2 |
| 11 | Beh 2A |

A field capable of indicating up to four behaviors may be configured as shown in Table 5. In Table 5, the mapping between behaviors and bits may vary.

For a duration X of Beh 1A, one duration may be configured through RRC. Alternatively, after a plurality of durations X are configured through RRC, one of the plurality of durations may be determined via DCI or MAC CE. In Case 1-1, Beh 1 may vary depending on the SSSG configuration of the UE.

Firstly, Beh 1 may refer to an operation when PDCCH monitoring adaptation is not indicated to the UE. That is, Beh 1 may mean the conventional PDCCH monitoring operation within the DRX active time. In other words, Beh 1 may be an operation of monitoring all of the maximum 10 SS sets configurable in a BWP. In this case, there may be constraints on the SSSG configuration of the UE. For example, SSSG #0 may be set to an SSSG including all SS sets, but this may be inefficient because the SS set monitored by Beh 1 and the SS set monitored by Beh 2 become the same. Therefore, constraints may be configured such that SSSG #0 monitored by Beh 2 includes only some SS sets rather than all SS sets. In general, SSSG #1 may be a power-efficient SSSG including minimal SS sets. In this case, the first bit may serve as a flag, where a value of 0 indicates the PDCCH monitoring skipping, and a value of 1 indicates the SSSG switching. On the other hand, the second bit may serve as a flag distinguishing between data-efficient and power-efficient SSSGs. However, in this case, Beh 1 may result in outcomes similar to when another SSSG including all SS sets is monitored. Therefore, when Beh 1 is indicated, there may be a need for the application delay required in the SSSG switching.

Secondly, Beh 1 may not only be associated with the PDCCH monitoring skipping but also with the SSSG switching. In other words, in the case of Beh 1, the UE may operate without any specific instructions. SSSG #0 may be viewed as an SSSG monitored by the UE in data-efficient situations (e.g., default SSSG).

Therefore, constraints may be required for SSSG #0 because Beh 1 may result in similar effects to monitoring SSSG #0.

For example, since there is no operation of monitoring all SS sets, Beh 2, which monitors the data-efficient SSSG, may be responsible for monitoring all SS sets. In addition, SSSG #0 may include SS sets to facilitate data transmission from the BS to the UE, and the SS sets may be related to scheduling and HARQ retransmission.

In other words, the data-efficient SSSG may mean that there should be no significant difference when monitoring the SSSG compared to monitoring all SS sets (e.g., in terms of latency and throughput). That is, the UE may consider SSSG #0 monitoring as the default operation if the SSSG switching operation is configured.

In general, a timer that falls back to the default SSSG after the SSSG switching is indicated may be configured. When the UE receives DCI including a bit field with a value of '11', the UE may perform the operation of Beh 2A (e.g., switching to SSSG #1). The UE may start the timer at the same time as performing the operation of Beh 2A. The UE may fall back to the default SSSG after the timer expires.

When the UE receives DCI including a bit field with a value of '11' while monitoring SSSG #1, the UE may restart the timer. In other words, the total time for monitoring SSSG #1 may increase.

On the other hand, when the UE receives a DCI including a bit field with a value of '00' while monitoring SSSG #1, the UE may maintain the current operation without restarting the timer. Therefore, the UE may distinguish between an instruction to switch back to the currently monitored SSSG and an instruction from Beh 1 based on the time difference in executing the operations.

In this case, there may be constraints on the configuration of the data-efficient SSSG, SSSG #0. Monitoring of SSSG #0 should involve minimal issues related to data transmission, compared to existing monitoring where the PDCCH monitoring adaptation of the UE is not applied.

Therefore, SS sets except for SS sets configurable for power saving purposes among all SS sets configurable per BWP may be included such that there are no issues with data scheduling. Alternatively, SS sets including SSSG #0 and SSSG #1 may be configured to be differentiated only for the PDCCH monitoring period of the UE. For example, SSSG #0 may be configured to have a short period for frequent PDCCH monitoring. SSSG #1 may have the same DCI format and RNTI as SSSG #0, but the PDCCH monitoring period thereof may be set longer.

If the UE is provided with information on the SSSG switching, the PDCCH monitoring operation of the UE may vary when the DRX active time starts. The SSSG switching controls the number and/or frequency of PDCCH monitoring by configuring the data-efficient SSSG (e.g., SSSG #0) and power-efficient SSSG (e.g., SSSG #1).

As mentioned above, if the data-efficient SSSG is configured such that there are no issues with scheduling, the UE may be expected to perform PDCCH monitoring in SSSG #0 or SSSG #1 when the DRX active time starts, unlike the conventional PDCCH monitoring operation. That is, if the UE is configured with an SSSG, the UE may not perform monitoring of all SS sets (i.e., the conventional PDCCH monitoring operation) within the DRX active time. Since the SSSG is configured, it is expected that the UE will only monitor the SSSG. In this case, the first operation described in Beh 1 (i.e., conventional PDCCH monitoring is performed because no PDCCH monitoring adaptation is instructed) may not be necessary.

### 2. Case 1-2

Case 1-2 represents a case where the UE is configured with both the SSSG switching and PDCCH monitoring skipping but Beh 1 is not configured. Similar to Case 1-1, the PDCCH monitoring adaptation indication field may be configured to indicate both the SSSG switching and PDCCH monitoring skipping jointly. Table 6 below shows exemplary bit mapping of two bits.

**[Table 6]**

| Bit value | Behavior |
|---|---|
| 00 | Beh 1A (duration X1) |
| 01 | Beh 1A (duration X2) |
| 10 | Beh 2 |
| 11 | Beh 2A |

In contrast to Case 1-1, Beh 1 is not configured in Case 1-2. However, Case 1-2 allows for dynamic indication of a plurality of PDCCH monitoring skipping durations. Two PDCCH monitoring skipping durations X1 and X2 may be determined via RRC or, among a plurality of PDCCH monitoring skipping durations configured via RRC, X1 and X2 may be determined by DCI or MAC CE.

As described above, since Beh 1 is not configured, there may be a need for constraints to ensure that SSSG #0 is data-efficient. Alternatively, all SS sets may be included SSSG #0 such that there are no differences between Beh 1 and Beh 2.

Case 1-1 and Case 1-2 relate to methods of configuring a DCI field indicating PDCCH monitoring adaptation when the UE is simultaneously configured with the SSSG switching and PDCCH monitoring skipping. Accordingly, the UE may be instructed to perform the SSSG switching and PDCCH monitoring skipping simultaneously. For example, while the UE is operating according to Beh 2 or Beh 2A, the UE may be instructed to operate according to Beh 1A. If the PDCCH monitoring skipping duration X (e.g., X1 or X2) indicated to the UE is longer than the remaining fallback timer, the UE may stop monitoring based on the current SSSG switching and fallback to the default SSSG after a lapse of the duration X. Conversely, if the duration X is shorter than the rest of the fallback timer, the UE may operate in various ways. For example, as described in the above example, the UE may stop monitoring based on the SSSG switching and fall back to the default SSSG after the lapse of the duration X. Alternatively, the UE may pause PDCCH monitoring during the duration X. After the duration X elapses, the UE may resume monitoring of the current SSSG. In other words, after the lapse of the duration X, the UE may monitor the SSSG related to the fallback timer during the remaining duration of the fallback timer.

In this case, the fallback timer may continuously count and decrease for the duration X or may stop counting for the duration X. These operations may be preconfigured through RRC or indicated through DCI.

On the other hand, the UE may be configured with either the SSSG switching or PDCCH monitoring skipping.

### 3. Case 2-1

Case 2-1 may be a case where the UE is capable of supporting only the PDCCH monitoring skipping or configured to perform only the PDCCH monitoring skipping through RRC.

**[Table7]**

| Bit value | Behavior |
|---|---|
| 00 | Beh 1 |
| 01 | Beh 1A (duration X1) |
| 10 | Beh 1A (duration X2) |
| 11 | Beh 1A (duration X3) |

PDCCH monitoring skipping durations X1, X2, and X3 may be set to various values in units of slots or milliseconds (ms). In addition, one of the durations X1, X2, and X3 may mean PDCCH monitoring skipping until the next DRX cycle. If Beh corresponding to the duration indicating PDCCH monitoring skipping until the next DRX cycle is indicated, the UE may end the current DRX active time and sleep immediately.

### 4. Case 2-2

Case 2-2 may be a case where the UE is capable of supporting only the SSSG switching or configured to perform only the SSSG switching through RRC.

**[Table8]**

| Bit value | Behavior |
|---|---|
| 00 | Beh 1 |
| 01 | Beh 2 |
| 10 | Beh 2A |
| 11 | Beh 2B |

SSSG #2 of Beh 2B may be a dormant SSSG or empty SSSG. The SSSG configuration method and constraints may be determined in the same way as Case 1-1.

On the other hand, a bit field may be configured such that when the UE is configured with both the SSSG switching and/or PDCCH monitoring skipping, the UE performs a combination of behaviors (Behs) rather than one behavior after receiving DCI.

### 5. Case 3-1

- 1-bit flag A distinguishes between Beh 1 and Beh 1A.
- 1-bit flag B distinguishes between Beh 2 and Beh 2A.

A two-bit PDCCH monitoring adaptation indication field may be composed of two 1-bit flags. Flag A indicates whether the UE should perform the PDCCH monitoring skipping, and Beh 1 indicates that the UE does not perform the PDCCH monitoring skipping. Therefore, when the two-bit PDCCH monitoring adaptation indication field is arranged in the sequence of AB, if flag A indicates Beh 1 and flag B indicates either Beh 2 or Beh 2A, it may mean that the SSSG switching is performed directly without the PDCCH monitoring skipping. This is identical to the SSSG switching in Rel-16. In other words, 1-bit flag A may become redundant, and only flag B may be used as the SSSG switching flag.

If flag A indicates Beh 1A and flag B indicates either Beh 2 or Beh 2A, the UE performs the PDCCH monitoring skipping for the preconfigured/indicated duration X and then performs the SSSG switching according to the indication of flag B.

On the other hand, the corresponding PDCCH monitoring adaptation indication field may be configured in the sequence of BA. As described above, when flag A indicates Beh 1, the same operation as Rel-16 switching is performed. If flag A indicates Beh 1A, the UE first performs the SSSG switching and then monitors an indicated SSSG for a configured timer. If the UE fails to receive DCI indicating different PDCCH monitoring adaptation during the timer, the UE may perform the PDCCH monitoring skipping for the duration X. The UE may continue monitoring the current SSSG or perform monitoring of the default SSSG after the end of the PDCCH monitoring skipping. The timer for continuing the SSSG switching and the monitoring operation after the PDCCH monitoring skipping may be predetermined by RRC or instructed through DCI after being configured via RRC

On the other hand, the PDCCH monitoring adaptation may be configured by combining a bitmap with operations for instructing monitoring of all SS sets within a BWP.

### 6. Case 3-2

- First bit: Monitoring on/off for SSSG #0
- Second bit: Monitoring on/off for SSSG #1

Each bit may indicate whether monitoring for the corresponding SSSG is enabled or disabled. For example, 00 means that monitoring is off for all SSSGs, which is equivalent to the PDCCH monitoring skipping (e.g., Beh 1A). 01 means that only SSSG #1 is monitored, and 10 means that only SSSG #0 is monitored. Further, 11 means monitoring for both SSSG #0 and SSSG #1, which is equivalent to monitoring all SS sets (e.g., Beh 1). Additionally, a duration during which Beh 1A, indicated by 00, is performed may be the same as the duration of a fallback timer configured for the SSSG switching.

On the other hand, it is also possible to construct structures encompassing the aforementioned cases and sub-configuration conditions thereof. Structure #1 may mean a case where only the PDCCH monitoring skipping is configured. Structure #2 may mean a case where only the SSSG switching is configured. Structure #3 may mean a case where both the SSSG switching and PDCCH monitoring skipping are configured. That is, Structure #1, #2, and #3 may correspond to scenarios where the capability parameter MonitoringAdaptationCapability is skipping, switching, or both, respectively.

If only the PDCCH monitoring skipping is configured, it may be configured according to Structure #1 below.

### 7. Structure #1

**[Table9]**

| Bit value | Behavior |
|---|---|
| 00 | Beh 1 (= Beh 1A with duration "0") |
| 01 | Beh 1A (duration X1) |
| 10 | Beh 1A (duration X2) |
| 11 | Beh 1A (duration X3) |

When only the SSSG switching is configured, it may be divided as follows depending on Beh 1 and SSSG configurations as described above.
(1) Beh 1 is set to `monitoring all SS sets' or 'no instructions'.
(2) Beh 1 may not be needed, and SSSG #0 of Beh 2 should include all SS sets or SSSG #0 needs to be configured to be data-efficient.

In Structure #2, the UE is instructed to switch to the currently monitored SSSG. Thus, the UE may be configured to reset the fallback timer to the default SSSG. Based on (1) and (2), the structure may be divided into Structure #2-1 and Structure #2-2 below. For example, Structure #2-1 is a structure based on (1), and Structure #2-2 is a structure based on (2).

### 8. Structure #2-1

**[Table10]**

| Bit value | Behavior |
|---|---|
| 00 | Beh 1 (= Beh 1A with duration "0") |
| 01 | Beh 2 |
| 10 | Beh 2A |
| 11 | Beh 2B |

### 9. Structure #2-2

**[Table 11]**

| Bit value | Behavior |
|---|---|
| 00 | Beh 2 |
| 01 | Beh 2A |
| 10 | Beh 2B |
| 11 | reserved |

As described above, if Beh 1 of Structure #2-1 is set to `monitoring all SS sets', there may be no constraints on SSSG configurations. If Beh 1 is set to 'no instructions', there may be constraints where SSSG #0 of Beh 2 should be configured to include all SS sets or be data-efficient.

When both the SSSG switching and PDCCH monitoring skipping are configured, it may be divided as follows based on Beh 1 and SSSG configurations, similarly to when only the SSSG switching is configured.
(1) Beh 1 is set to `monitoring all SS sets' or 'no instructions'.
(2) Beh 1 may not be needed, and SSSG #0 of Beh 2 should include all SS sets or SSSG #0 needs to be configured to be data-efficient.

Based on this differentiation, the following structures may be configured. For example, Structure #3-1 is a structure based on (1), and Structure #3-2 is a structure based on (2).

### 10. Structure #3-1

**[Table12]**

| Bit value | Behavior |
|---|---|
| 00 | Beh 1 (= Beh 1A with duration "0") |
| 01 | Beh 1A (duration X1) |
| 10 | Beh 1A (duration X2) |
| 11 | Beh 1A (duration X3) |

### 11. Structure #3-2

**[Table13]**

| Bit value | Behavior |
|---|---|
| 00 | Beh 1 (= Beh 1A with duration "0") |
| 01 | Beh 1A (duration X1) |
| 10 | Beh 2 |
| 11 | Beh 2A |

Structures #3-3 and #3-4 for Cases 3-1 and 3-2, each of which is configured in the form of a flag or bitmap, are as follows.

### 12. Structure #3-3

**[Table14]**

| Bit value | Behavior |
|---|---|
| 00 | Beh 2 |
| 01 | Beh 2A |
| 10 | Beh 2 after Beh 1A |
| 11 | Beh 2A after Beh 1A |

### 13. Structure #3-4

**[Table15]**

| Bit value | Behavior |
|---|---|
| 00 | Beh 1A |
| 01 | Beh 2A |
| 10 | Beh 2 |
| 11 | Beh 1 |

The structures configured above are representative examples for constituting the cases proposed in the present disclosure. The order of bits and the mapping between bits and behaviors may vary slightly. Although the bit configuration and bit mapping differ, the structures may be considered identical if the principle remains the same.

### [Method 1-2] Method of configuring one-bit field

### 1. Case 4-1

Similar to Case 2-1, Case 4-1 may be a case where the UE is capable of supporting only the PDCCH monitoring skipping or configured to perform only the PDCCH monitoring skipping through RRC.

**[Table16]**

| Bit value | Behavior |
|---|---|
| 0 | Beh 1 |
| 1 | Beh 1A |

The duration X of Beh 1A may be configured via RRC. Alternatively, after a plurality of durations are configured via RRC, one of the plurality of durations may be determined via DCI or MAC CE.

### 2. Case 4-2

Similar to Case 2-2, Case 4-2 may be a case where the UE is capable of supporting only the SSSG switching or configured to perform only the SSSG switching through RRC.

**[Table17]**

| Bit value | Behavior |
|---|---|
| 0 | Beh 2, Beh 2A, or Beh 2B |
| 1 | Beh 2, Beh 2A, or Beh 2B |

In Table 17, the same behavior may not be configured for 0 and 1. For example, behaviors may be configured as 0: Beh 2 and 1: Beh 2A. That is, behaviors may not be configured as follows: 0: Beh 2 and 1: Beh 2A. Additionally, considering the purpose of the SSSG switching and SSSG configurations, indicating Beh 2 may necessarily be included.

### 3. Case 5-1

In Case 5-1, when the UE is configured with both the SSSG switching and PDCCH monitoring skipping, the PDCCH monitoring adaptation indication field may be configured to indicate both the SSSG switching and PDCCH monitoring skipping jointly. Table 18 below shows exemplary bit mapping of one bit.

**[Table 18]**

| Bit value | Behavior |
|---|---|
| 0 | Beh 1A |
| 1 | Beh 2A |

SSSG #0 should be configured to include all SS sets or be data-efficient. The default operation of the UE is to monitor SSSG #0. In addition, the UE may receive DCI and perform the PDCCH monitoring skipping or SSSG switching based on the DCI. The PDCCH monitoring skipping duration and fallback timer for each PDCCH monitoring adaptation operation may be configured to be the same or different. The UE may always fall back to the default operation after performing the PDCCH monitoring adaptation operation corresponding to Beh 1A or Beh 2A. Further, an operation in which the UE implicitly switches to SSSG #0 upon detecting DCI while performing Beh 2A may be preconfigured.

### 4. Case 5-2

Case 5-2 may include all bit mapping relationships not considered in Case 5-1 when both the SSSG switching and PDCCH monitoring skipping are configured to the UE. Table 19 below shows exemplary bit mapping of one bit.

**[Table 19]**

| Bit value | Behavior |
|---|---|
| 0 | Beh 1 |
| 1 | Beh 2B |

Table 19 shows only one case included in Case 5-2. Case 5-2 may be used to indicate complex PDCCH monitoring adaptation by varying the structure (or case) configuration for each DCI format, which will be explained below in the present disclosure, instead of being solely used to indicate PDCCH monitoring adaptation through a single DCI format.

According to [Method 1], based on the number of bits in the PDCCH monitoring adaptation indication field included in DCI and the type of PDCCH monitoring adaptation supported by the UE or configured to the UE, appropriate PDCCH monitoring adaptation operations may be mapped to each value of the PDCCH monitoring adaptation indication field in the DCI.

In addition, based on these PDCCH monitoring adaptation operations, a related PDCCH monitoring adaptation operations may be efficiently provided to the UE, and the UE may perform the PDCCH monitoring adaptation operation.

### [Method 2] PDCCH monitoring adaptation indication field configured according to Method 1 may be applied separately for each DCI format.

In [Method 1], provided are the structures (or cases) that allow for configuring a PDCCH monitoring adaptation indication field with a maximum of two bits. In [Method 2], methods of applying the structures or cases of the PDCCH monitoring adaptation indication field proposed in [Method 1] separately for each DCI format will be described.

### [Method 2-1] PDCCH monitoring adaptation indication field may be configured differently for each DCI format.

The PDCCH monitoring adaptation indication field may be configured differently for each DCI format. DCI formats x_1 and x_2 may be applicable to indicate PDCCH monitoring adaptation (other DCI formats under discussion may also be added).

For example, in DCI format x_1, which has ample space in the field configuration, a two-bit case (e.g., Method 1-1) may be configured. In DCI format x_2, either a 1-bit (e.g., Method 1-2) or a 2-bit case (e.g., Method 1-1) may be flexibly configured. However, this is just a simple example, and the BS may configure the number of bits for each DCI format to be the same or different.

In the above example, if two bits are configured in DCI format x_1 and one bit is configured in DCI format x_2, the BS may select a DCI format to indicate the PDCCH monitoring adaptation along with UE scheduling. For example, if there is no significant difference between using DCI format 1_1 and DCI format 1_2 for data scheduling, the DCI format may be selected based on the PDCCH monitoring adaptation to be indicated after DL transmission.

To this end, the BS may configure cases where the PDCCH monitoring adaptation indication field is configured for each DCI format to be hierarchical or non-hierarchical. For example, if the UE supports both SSSG switching and PDCCH monitoring skipping, and if Case 1-1 is configured for DCI format 1_1 and Case 4-1 is configured for DCI format 1_2, there is a hierarchical relationship between the two cases. Therefore, if there is no difference in terms of data scheduling, it may be advantageous to indicate the PDCCH monitoring adaptation through DCI format 1_2 with fewer bits depending on the PDCCH monitoring adaptation. For example, if the BS desires to instruct Beh 1 or Beh 1A, the BS may use either DCI format 1_1 or DCI format 1_2. In this case, it may be advantageous for the BS to instruct Beh 1 or Beh 1A through DCI format 1_2 with fewer bits.

For example, if Case 3-2 is configured for DCI format 1_1 and cases with no hierarchical relationship with Case 5-1 are configured for DCI format 1_2, the BS may select a DCI format for data scheduling depending on the PDCCH monitoring adaptation. For instance, if the BS desires to instruct the UE to monitor SSSG #0 or SSSG #1, the BS may indicate the PDCCH monitoring adaptation to the UE via DCI format 1_1. Similarly, if the BS desires to indicate either Beh 1A or Beh 2A, the BS may indicate the PDCCH monitoring adaptation to the UE via DCI format 1_2.

On the other hand, if the UE is capable of supporting only either the PDCCH monitoring skipping or SSSG switching as described above, the BS may independently configure cases according to the PDCCH monitoring adaptation operations at the discretion thereof. If two bits are configured in DCI format x_1 and one bit is configured in DCI format x_2, the one-bit field in DCI format x_2 may also be used to configure cases that are dependent on the cases configured in DCI format x_1. For example, if the two-bit field is configured in DCI format x_1, it may be considered that the one-bit field in DCI format x_2 is automatically set as the lowest bit field. In such cases, the RRC configuration may be simplified since there is no need to configure cases independently for each DCI format. For example, if the two-bit field in DCI format x_1 is configured as in Case 1-1, and if the UE is configured with only the PDCCH monitoring skipping, the one-bit field in DCI format x_2 may be set to Beh 1 when it is 0 and Beh 1A when it is 1, depending on the values 00 and 01 of Case 1-1.

On the other hand, if only the SSSG switching is configured to the UE, the one-bit field in DCI format x_2 may be set to Beh 2 when it is 0 and Beh 2A when it is 1, depending on the values 10 and 11 of Case 1-1.

The BS may select either DCI format x_1 or DCI format x_2 by considering the next scheduling of the UE. For instance, if it is expected there is no traffic during a long period of time after scheduling, the PDCCH monitoring adaptation may be indicated by DCI format x_1 where Case 1-2 configured, which allows for a plurality of PDCCH monitoring skipping durations. In other cases, the PDCCH monitoring adaptation may be indicated by DCI format x_2 or DCI format x_1.

As described in the example above, the BS may indicate the scheduling and PDCCH monitoring adaptation to the UE flexibly by configuring various cases for each DCI format. Additionally, besides the mentioned example, the BS may independently configure cases for each DCI format at the discretion thereof.

### [Method 2-2] PDCCH monitoring adaptation indication field may be configured separately for each DLIUL.

Similarly to Method 2-1, the PDCCH monitoring adaptation indication field may be configured separately for DL DCI and UL DCI (i.e., DCI format 0_x and DCI format 1_x). Each DCI case may be configured as in Method 2-1. For each DL/UL DCI, there may be constraints such that only the same configurations are allowed. For example, while different configurations may be allowed between DL DCI and UL DCI, the same configurations may be allowed for DL DCI (or UL DCI), regardless of the format.

### [Method 2-3] Fields may be configured to differentiate PDCCH monitoring adaptation operations for each DCI format.

Method 2-3 may be limited to cases where the UE supports both the SSSG switching and PDCCH monitoring skipping or cases where the UE is configured with both the SSSG switching and PDCCH monitoring skipping through RRC. For example, the SSSG switching and PDCCH monitoring skipping may be differentiated and configured separately for each DCI format. In this case, only one PDCCH monitoring adaptation operation may be configured as described in Cases 2-1, 2-2, 4-1, and 4-2 described above, and thus more flexible PDCCH monitoring adaptation operations may be indicated. For example, DCI format x_1 may be set as a case for PDCCH monitoring skipping, and DCI format x_2 may be set as a case for SSSG switching. For example, DCI format x_1 may be set as one of Case 2-1 and Case 4-1, and DCI format x_2 may be set as one of Case 2-2 and Case 4-2.

According to [Method 2], a DCI payload optimized for each DCI format may be configured by configuring the PDCCH monitoring adaptation indication field for each DCI format.

In addition, when the PDCCH monitoring adaptation indication field is configured for each DCI format, the UE may be more likely to predict the configuration of the PDCCH monitoring adaptation indication field based on the DCI format upon receiving DCI, thereby improving the decoding accuracy and speed of the DCI. Accordingly, the UE may rapidly perform the PDCCH monitoring adaptation operation.

### [Method 3] Different UE operations may be configured depending on DCI and SS sets included in SSSG monitored by UE.

According to [Method 1] and [Method 2], cases may be distinguished and configured for each DCI format, and at the same time, different UE operations may be configured depending on SS sets monitored by the UE.

### [Method 3-1] When PDCCH monitoring adaptation indication field is zero bits (i.e., when there is no PDCCH monitoring adaptation indication field in DCI)

In [Method 1], the PDCCH monitoring adaptation indication field is set to one or two bits, while in a specific DCI format, the PDCCH monitoring adaptation indication field may be set to zero bits. That is, the specific DCI format may have no field for PDCCH monitoring adaptation. For example, DCI format x_2 may consist of zero bits. In addition, DCI format x_0, which is fallback DCI, corresponds to [Method 3-1] because it is difficult to add the PDCCH monitoring adaptation indication field. Thus, there may be no field for PDCCH monitoring adaptation.

Therefore, in this case, UE operations may be configured based on an SSSG including an SS set where the UE monitors DCI. For example, when the fallback DCI is detected, the UE may be configured to perform the predetermined default PDCCH monitoring operation.

There are two possible criteria for distinguishing SSSGs during DCI detection.
(1) An SSSG where SSSG switching is indicated at the latest time before the DCI detection
(2) An SSSG including an SS set where DCI is monitored (however, if the SS set is included in two or more SSSGs, an SSSG with the lower SSSG ID is selected)

As described above, the SSSG of the UE is configured to include all SS sets or be data-efficient. Therefore, when the UE detects DCI an SSSG for power saving, the UE may stop PDCCH monitoring adaptation for power saving and start the default PDCCH monitoring adaptation operation (e.g., PDCCH monitoring in the default SSSG), thereby not affecting the latency or throughput of data transmission.

Furthermore, if the UE detects DCI in an SSSG other than the default SSSG, the UE may initiate PDCCH monitoring adaptation operations of Beh 1 or Beh 2. The PDCCH monitoring adaptation operation that the UE initiates may be determined based on cases configured for other DCI formats (e.g., DCI formats containing one-bit or two-bit PDCCH monitoring adaptation operation fields) rather than the zero-bit field.

For example, when Case 1-2 is configured for DCI format x_1, if the UE detects DCI format x_0 or DCI format x_2 in an SSSG other than the default one, the UE may be configured to perform the PDCCH monitoring adaptation operations of Beh 2. A DCI format triggering UE operations among DCI formats with no PDCCH monitoring adaptation indication fields may be selected and configured at the discretion of the BS.

Such implicit instructions may be limited to cases where the application delay of the PDCCH monitoring adaptation indication is configured after the UE transmits HARQ-ACK or UL transmission. This operation is aimed at minimizing error cases such as DCI missing cases. For the application delay, which is represented by a certain time after DCI monitoring, there may be a mismatch between SSSGs perceived and monitored by the UE and BS.

### [Method 3-2] When PDCCH monitoring adaptation indication field is set to one or two bits

A plurality of cases with the same number of bits may be configured for one DCI format. The PDCCH monitoring adaptation may be applied by classifying cases depending on an SSSG including an SS set monitored by the UE. For example, Case 1-1 and Case 1-2 may be configured for DCI format 1_1. When the UE detects the corresponding DCI in the default SSSG, the PDCCH monitoring adaptation may be applied according to Case 1-2. When the UE detects the DCI in an SSSG other than the default SSSG, the PDCCH monitoring adaptation may be applied according to Case 1-1. This is because the UE may need the PDCCH monitoring adaptation operation such as Beh 1 in an SSSG other than the default SSSG and may not need the PDCCH monitoring adaptation operation such as Beh 1 in the default SSSG.

For example, Case 3-1 and Case 3-2 may be configured for DCI format 1_2. When the UE detects the corresponding DCI in the default SSSG, the PDCCH monitoring adaptation may be applied according to Case 3-2. When the UE detects the DCI in an SSSG other than the default SSSG, the PDCCH monitoring adaptation may be applied according to Case 3-1.

On the other hand, since DCI format x_2 is capable of being configured flexibly, cases with different numbers of bits for each SSSG may be configured to be applied. For example, Case 3-2 and Case 5-1 may be configured for DCI format 1_2. When the UE detects the corresponding DCI in the default SSSG, the PDCCH monitoring adaptation may be applied according to Case 3-2. When the UE detects the DCI in an SSSG other than the default SSSG, the PDCCH monitoring adaptation may be applied according to Case 5-1.

### [Method 3-3] Method of configuring different PDCCH monitoring adaptation operation for each DCI format even if PDCCH monitoring adaptation indication field in DCI is zero bits

When the PDCCH monitoring adaptation indication field of DCI is zero bits, DCI format x_0 or DCI format x_2 may be configured. In this case, the UE may be configured to perform different operations when receiving DCI format x_0 and when receiving DCI format x_2. For example, if the UE receives DCI format x_0, the UE may maintain the current PDCCH monitoring adaptation operation, including the default PDCCH monitoring adaptation operation. For example, if the UE receives DCI format x_2, the UE may be configured to perform a PDCCH monitoring adaptation operation including specific PDCCH monitoring skipping or specific SSSG switching. The BS may configure the UE to perform different PDCCH monitoring adaptation operations for DCI format x_0 and DCI format x_2. Candidates for PDCCH monitoring adaptation operations may include: maintaining the current PDCCH monitoring adaptation operation (e.g., no change); fallback to the default PDCCH monitoring adaptation operation (e.g., monitoring of the default SSSG monitoring or all SS sets); and/or PDCCH monitoring adaptation operations according to at least one of Beh 1A/2/2A/2B

Depending on the necessity of changing the current PDCCH monitoring adaptation scheduled to the UE, the BS may select one of DCI format x_0, DCI format x_1, and DCI format x_2 and then perform (PDSCH/PUSCH) scheduling with the selected DCI format. For example, if the PDCCH monitoring adaptation is necessary, the BS may transmit DCI format x_1 by intentionally setting DCI format x_2 to zero bits. If the PDCCH monitoring adaptation is not necessary and only the (PDSCH/PUSCH) scheduling is required, the BS may transmit DCI format x_2. If fallback to the default PDCCH monitoring adaptation operation is necessary, the BS may transmit DCI format x_0. Here, when it is said that the PDCCH monitoring adaptation is not necessary, it may include maintaining the current PDCCH monitoring adaptation operation. That is, in the above example, if the BS maintains the current PDCCH monitoring adaptation and only performs (PDSCH/PUSCH) scheduling without changing the PDCCH monitoring adaptation operation, the BS may transmit DCI format x_2.

### [Method 3-4] Basic rules for PDCCH monitoring adaptation operations of UE when complex PDCCH monitoring adaptation indications with different PDCCH monitoring adaptation operations are configured even if different or same number of bits are configured

According to the above-described methods, when various cases are configured for each DCI format, DCIs including different PDCCH monitoring adaptation indications may be received at the same time (e.g., within the same slot). For example, the UE may receive DCI including a two-bit PDCCH monitoring adaptation indication field and DCI including a one-bit PDCCH monitoring adaptation indication field at the same time. In this case, to prevent conflicts between different PDCCH monitoring adaptation indications, methods of configuring basic conditions or interpreting the different PDCCH monitoring adaptation indications may be required.

As described above, when cases of DCI including a one-bit PDCCH monitoring adaptation indication field has a dependency relationship with cases of DCI including a two-bit PDCCH monitoring adaptation indication field such that the former is included in the latter, only the PDCCH monitoring adaptation commonly included in both DCIs may be indicated if the DCIs are transmitted at the same time, if there is no dependency between the PDCCH monitoring adaptation operations included in the two DCIs, one specific indication among PDCCH monitoring adaptation indications of the two DCIs may be set to "no indication." For example, if the BS desires to indicate a specific PDCCH monitoring adaptation operation configured in the first DCI, the BS can indicate "no indication" through the second DCI. In this case, the UE may ignore the PDCCH monitoring adaptation indication of the second DCI and perform the PDCCH monitoring adaptation according to the PDCCH monitoring adaptation indication of the first DCI. The directive of "no indication" may be configured to correspond to a specific state only when DCIs are transmitted at the same time. For example, when two DCIs overlap at the same time, the highest index (e.g., '1' for one bit and '11' for two bits) may be interpreted as "no indication" rather than the original indication.

Alternatively, "Beh 1: No PDCCH skipping is activated" may be included in the configuration of a PDCCH monitoring adaptation indication field, which is interpreted to mean that the current PDCCH monitoring adaptation operation is maintained. In addition, when there is collision between two DCIs, one of the DCIs may be configured to always indicate the corresponding state.

Alternatively, the BS may instruct only the PDCCH monitoring adaptation operation commonly included in two DCIs. That is, only the PDCCH monitoring adaptation operation commonly included in cases corresponding to the two DCIs may be indicated. If there is no common PDCCH monitoring adaptation operation between the cases corresponding to the two DCIs, the UE may follow different rules.

Alternatively, among PDCCH monitoring adaptation operations indicated to the UE through two DCIs, the UE may prioritize performing operations according to PDCCH monitoring adaptation with an early application time and ignore PDCCH monitoring adaptation with a later application time.

According to [Method 3], even if there is no PDCCH monitoring adaptation indication field in DCI, the PDCCH monitoring adaptation may be performed. In addition, since PDCCH monitoring is implicitly indicated, there is no need to add the PDCCH monitoring adaptation indication field to DCI. That is, the PDCCH monitoring adaptation is capable of being indicated even with the existing DCI payload, and thus, it is possible to reduce UE power consumption without modifying the standard DCI configuration.

Additionally, since the payload size of DCI does not increase, decoding complexity may be reduced, leading to further reduction in the UE power consumption.

### [Method 4] Method of determining number of SSSGs according to number of bits of PDCCH monitoring adaptation indication field

Table 20 below shows the PDCCH monitoring adaptation indication fields configurable in scheduling DCI, which have been discussed on the 38.212 draft change request (CR) at RAN1#107-e.

**[Table 20]**

| |
|---|
| ... |
| - PDCCH monitoring adaptation indication - 0, 1 or 2 bits |
| - 1 or 2 bits, if *searchSpaceGroupIdList-r17* is not configured and if *PDCCHSkippingDurationList* is configured |
| - 1 bit if the UE is configured with only one duration by *PDCCHSkippingDurationList;* |
| - 2 bits if the UE is configured with more than one duration by *PDCCHSkippingDurationList.* |
| - 1 or 2 bits, if *PDCCHSkippingDurationList* is not configured and if *searchSpaceGroupIdList-r17* is configured |
| - 2 bits, if *PDCCHSkippingDurationList* is configured and if *searchSpaceGroupIdList-r17* is configured |
| - 0 bit, otherwise |
| ... |

Table 21 below shows the configurations of PDCCH monitoring adaptation indications for each case, which have been discussed on the 38.213 draft CR at RAN1#107-e.

**[Table 21]**

| |
|---|
| ... |
| A UE can be provided group indexes for a Type3-PDCCH CSS set or USS set by *searchSpaceGronpIdList-r17* for PDCCH monitoring on a serving cell and, if the UE is not provided *PDCCHSkippingDurationList,* DCI format 0_1, or DCI format 1_1, or DCI format 0_2, or DCI format 1_2 that schedules a PUSCH transmission or a PDSCH reception can include a PDCCH monitoring adaptation field of 1 bit or of 2 bits. |
| If the field has 1 bit and for PDCCH monitoring according to Type3-PDCCH CSS sets or USS sets on the serving cell |
| - a '0' value for the bit indicates start of PDCCH monitoring according to search space sets with group index 0 and stop of PDCCH monitoring according to search space sets with other group indexes, if any |
| - a '1' value for the bit indicates start of PDCCH monitoring according to search space sets with group index 1 and stop of PDCCH monitoring according to search space sets with other group indexes, if any |
| If the field has 2 bits and for PDCCH monitoring according to Type3-PDCCH CSS sets or USS sets on the serving cell |
| - a '00' value for the bit indicates start of PDCCH monitoring according to search space sets with group index 0 and stop of PDCCH monitoring according to search space sets with other group indexes, if any |
| - a '01' value for the bit indicates start of PDCCH monitoring according to search space sets with group index 1 and stop of PDCCH monitoring according to search space sets with other group indexes, if any |
| - a '10' value for the bit indicates start of PDCCH monitoring according to search space sets with group index 2 and stop of PDCCH monitoring according to search space sets with other group indexes, if any |
| - a '11' value is reserved |
| ... |

Meanwhile, *searchSpaceGroupIdList-r17* in Table 20 is an RRC parameter introduced for SSSG switching for power saving purposes based on Rel-16 *searchSpaceGroupIdList* in Table 22 below.

**[Table 22]**

| **searchSpaceGroupIdList** |
|---|
| List of search space group IDs which the search space is associated with. The network configures at most 2 search space groups per BWP where the group ID is either 0 or 1. |

As shown in Table 22, *searchSpaceGroupIdList* is configured within an SS set configuration and represents a list of SSSGs including corresponding SS sets. In addition, *searchSpaceGroupIdList-r17* may be configured with a combination of {SSSG # 0, SSSG #1, SSSG #2}. Therefore, for all up to 10 SS sets per BWP, which are configurable to the UE, if *searchSpaceGroupIdList-r17* is configured with only SSSG #0 and SSSG #1, excluding SSSG #2, the presence or absence of SSSG #2 may be unclear. In this case, due to the absence of SSSG #2, it may be regarded that only two SSSGs are configured to the UE or SSSG #2 is set to an 'empty' SSSG including no SS sets. As shown in Table 20 and Table 21, when the UE is configured with SSSG switching (for example, when *searchSpaceGroupIdList-r17* is configured), the number of bits in the PDCCH monitoring adaptation indication field or the number of SSSGs needs to be determined. Referring to Table 20] and Table 21, each PDCCH monitoring adaptation indication field may have either one or two bits. However, Table 20 and Table 21 show configurations based on the number of bits, thus the correlation between the number of bits and the number of SSSGs configured to the UE is not determined. For example, if the PDCCH monitoring adaptation indication field is composed of one bit and three SSSGs are configured, it is not possible to determine which two SSSG indices are selected for PDCCH monitoring adaptation indications.

### [Method 4-1] After determination of PDCCH monitoring adaptation indication field, number of SSSGs configured to the UE may be determined based thereon.

[Method 4-1] proposes that after determination of the number of bits in the PDCCH monitoring adaptation indication field in DCI, SSSGs configured to the UE may be determined based on the number of bits in the PDCCH monitoring adaptation indication field.

To support the 'empty' SSSG, it is assumed as in the above example that for all up to 10 SS sets per BWP, *searchSpaceGroupIdList-r17* is configured for only SSSG #0 and SSSG #1, excluding SSSG #2, and the PDCCH monitoring adaptation indication field is set to two bits. Thus, SSSG #2 may be set to the 'empty' SSSG that does not include any SS sets.

In other words, if the corresponding PDCCH monitoring adaptation indication field is set to two bits, there may always be three SSSGs. When two SSSGs are configured to the UE and the PDCCH monitoring adaptation indication field is set to one bit, if the PDCCH monitoring adaptation indication field is changed to two bits without changing the configuration of the SSSGs, the UE and BS may implicitly recognize that SSSG #2 is set to the 'empty' SSSG.

For all up to 10 SS sets per BWP, if *searchSpaceGroupIdList-r17* is configured for only SSSG #0 and SSSG #1, excluding SSSG #2, and if the PDCCH monitoring adaptation indication field is set to one bit, SSSG #2 may not exist. When the PDCCH monitoring adaptation indication field is one bit, the SSSG index of SSSG #2 may be ignored even if *searchSpaceGroupIdList-r17* in the SS set configuration of the UE includes SSSG #2. When the PDCCH monitoring adaptation indication field is set to one bit, if *searchSpaceGroupIdList-r17* is configured for only SSSG #0 and SSSG #2, excluding SSSG #1, for all up to 10 SS sets per BWP, SSSG #1 may be the 'empty' SSSG that does not include any SS sets.

In other words, the number of SSSGs may be determined according to the number of bits of the PDCCH monitoring adaptation indication field. When the PDCCH monitoring adaptation indication field is set to two bits, three SSSGs may be determined, and when the PDCCH monitoring adaptation indication field is set to one bit, two SSSGs may be determined. For example, after the number of bits of the PDCCH monitoring adaptation indication field is determined, the 'empty' SSSG may be configured to exist or not exist through the SS set configuration. Therefore, if the number of bits in the PDCCH monitoring adaptation indication field changes, the number of SSSGs configured to the UE may also be implicitly changed, and an SSSG that does not exist may be considered as the 'empty' SSSG.

### [Method 4-2] After determination of set of SSSG indices configurable to UE through higher layer signaling, number of bits of PDCCH monitoring adaptation indication field may be determined based on number of SSSG indices in corresponding SSSG index set.

[Method 4-2] proposes that after determination of SSSGs configured to the UE, the number of bits in the PDCCH monitoring adaptation indication field in DCI may be determined based thereon.

The BS may configure an SS set to the UE through higher layer signaling. The BS may determine a set of SSSG indices configurable to the UE and configure the set of SSSG indices to the UE. Accordingly, the UE may know the number of SSSGs configurable by the BS, and based on the number of SSSGs, the UE may implicitly determine the number of bits in the PDCCH monitoring adaptation indication field. For example, if the set of SSSG indices configurable to the UE is denoted as *searchSpaceGroupIdCandidates,* the UE may be configured with *searchSpaceGroupIdCandidates* = {0, 1}. In this case, the UE may know that candidate configurable SSSGs are SSSG #0 and SSSG #1 and implicitly know that the PDCCH monitoring adaptation indication field is determined to be one bit.

As another example, if *searchSpaceGroupIdCandidates* = {0, 1, 2} is configured to the UE, the UE may know that candidate configurable SSSGs are SSSG #0, SSSG #1, and SSSG #2. The UE may implicitly know that the PDCCH monitoring adaptation indication field is determined to be two bits. In this scenario, for all up to 10 SS sets per BWP, if *searchSpaceGroupIdList-r17* is configured for only SSSG #0 and SSSG #1, excluding SSSG #2, the UE may know that SSSG #2 is the 'empty' SSSG that does not include any SS sets.

Alternatively, the number of bits of the PDCCH monitoring adaptation indication field may be configured indirectly by determining the maximum number of SSSGs configurable to the UE. Regarding the current Rel-17 RRC parameter, searchSpaceGroupIdList-r17, the parameter maxSearchSpaceGroup-r17, which could signify the maximum number of SSSGs for the UE, is fixed to 3. If the parameter is allowed to be dynamically set to 2 or 3, it may indicate the maximum number of SSSGs that the BS desires to configure to the UE. In addition, the BS uses UE capacity information reported by the UE (e.g., the number of SSSGs that the UE is capable of supporting) or UE assistance information (e.g., the number of SSSGs preferred by the UE) to configure the value of the corresponding parameter.

For example, if the UE is configured with *maxSearchSpaceGroup-r17* = 3, the UE may know that candidate SSSGs are SSSG #0, SSSG #1, and SSSG #2. In addition, the UE may implicitly know that the PDCCH monitoring adaptation indication field is determined to be two bits. In this scenario, for all up to 10 SS sets per BWP, if *searchSpaceGroupIdList-r17* is configured for only SSSG #0 and SSSG #1, excluding SSSG #2, the UE may know that SSSG #2 is the 'empty' SSSG that does not include any SS sets.

In the present disclosure, an example is provided where SSSG index 0 and SSSG index 1 are configured, while SSSG index 2 is excluded. However, combinations of configured and excluded SSSG indices are not limited thereto. That is, any combinations of indices are allowed. For example, a case where SSSG index 0 or SSSG index 1 is excluded may also be allowed. However, unless specified otherwise, it is assumed by default that SSSG index 0 and SSSG index 1 are configured and SSSG index 2 is excluded.

The BS may select one of [Method 4-1] and [Method 4-2] to configure/indicate the selected one to the UE through higher layer signaling, MAC CE, and/or DCI.

According to [Method 4], when either the number of bits in the PDCCH monitoring adaptation indication field or the number of candidate SSSGs is determined, the other may be indirectly determined. Therefore, only one of the two pieces of information may be provided to UE, thereby reducing signaling overhead.

In addition, when both pieces of information are transmitted, it is possible to reduce the risk of errors that may occur if the number of candidate SSSGs exceeds the number of SSSGs capable of being indicated by the configured number of bits in the PDCCH monitoring adaptation indication field.

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

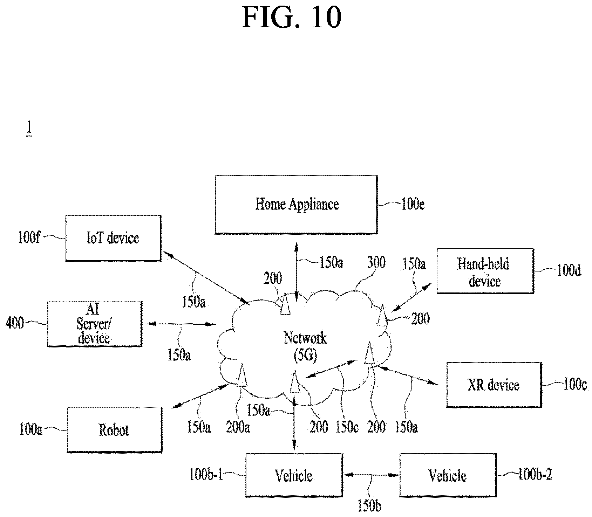

FIG. 10 illustrates a communication system 1 applied to the present disclosure.

Referring to FIG. 10, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (Al) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

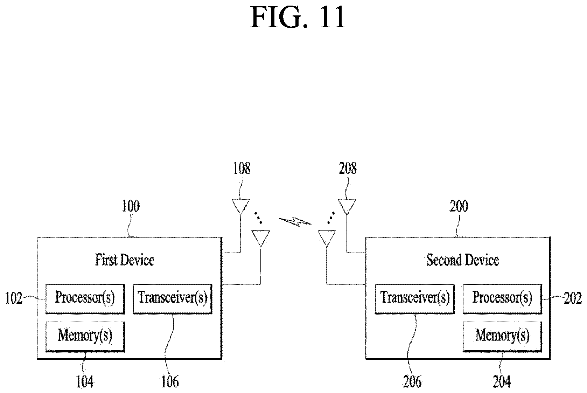

FIG. 11 illustrates wireless devices applicable to the present disclosure.

Referring to FIG. 11, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 10.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

Specifically, instructions and/or operations, controlled by the processor(s) 102 of the first wireless device 100 and stored in the memory(s) 104 of the first wireless device 100, according to an embodiment of the present disclosure will now be described.

Although the following operations will be described based on a control operation of the processor(s) 102 in terms of the processor(s) 102, software code for performing such an operation may be stored in the memory 104. For example, in the present disclosure, the at least one memory(s) 104 may store instructions or programs as a computer-readable storage medium. The instructions or the programs may cause, when executed, at least one processor operably connected to the at least one memory to perform operations according to embodiments or implementations of the present disclosure, related to the following operations.

To support the operations proposed in the present disclosure, the processor(s) 102 may report information on the capability of a UE to a BS through the transceiver(s) 106. The capability information may include capability information indicating whether SSSG switching and/or PDCCH monitoring skipping are supported. However, reporting the information on the capability of the UE may be omitted in specific cases (for example, when the BS already has the information or when each operation method is modified due to the needs of the BS).

To support the operations proposed in the present disclosure, the processor(s) 102 may monitor first information on the configuration of a PDCCH monitoring adaptation indication field for each DCI format and second information on a PDCCH monitoring operation method of the processor(s) 102 upon receiving a DCI format and then receive the first information and the second information through the transceiver(s) 106. In this case, the first information and the second information may be received separately or received together in common configuration information. For example, the processor(s) 102 may receive the first information, second information, and/or configuration information through the transceiver(s) 106 via a higher layer signal (e.g., SIB or RRC signaling). Alternatively, the processor(s) 102 may receive DCI including the first information, second information, and/or configuration information based on information received through a higher layer. In other words, the processor(s) 102 may receive one of the configurations of PDCCH monitoring adaptation indication fields based on a plurality of DCI formats, which are provided (semi-)statically to the processor(s) 102, and the configurations related to the PDCCH monitoring operation through the transceiver(s) 106 via specific means (for example, DCI or MAC CE/header).

Based on the first information, second information, and/or configuration information, which are related to the configuration of the PDCCH monitoring adaptation indication field based on the DCI format and the PDCCH monitoring operation, the processor(s) 102 may expect the timing of PDCCH reception and the PDCCH monitoring adaptation operation based on the DCI format. The processor(s) 102 may receive and decode a PDCCH at the location of the corresponding reception timing and perform the indicated PDCCH monitoring adaptation operation.

The processor(s) 102 may receive a PDSCH or transmit a PUSCH based on the received PDCCH through the transceiver(s) 106. However, if the DCI included in the received PDCCH is non-scheduling DCI, the PDSCH reception or PUSCH transmission may be omitted, and the processor(s) 102 may perform operations indicated by the DCI.

Specific methods of operating the processor(s) 102 described above may be based on at least one of [Method 1] to [Method 4].

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Specifically, instructions and/or operations, controlled by the processor(s) 202 of the second wireless device 200 and stored in the memory(s) 204 of the second wireless device 200, according to an embodiment of the present disclosure will now be described.

Although the following operations will be described based on a control operation of the processor(s) 202 in terms of the processor(s) 202, software code for performing such an operation may be stored in the memory(s) 204. For example, in the present disclosure, the at least one memory(s) 204 may store instructions or programs as a computer-readable storage medium. The instructions or the programs may cause, when executed, at least one processor operably connected to the at least one memory to perform operations according to embodiments or implementations of the present disclosure, related to the following operations.

To support the operations proposed in the present disclosure, the processor(s) 202 may receive information on the capability of a UE from the UE through the transceiver(s) 206. The capability information may include capability information indicating whether SSSG switching and/or PDCCH monitoring skipping are supported. However, receiving the information on the capability of the UE may be omitted in specific cases (for example, when the processor(s) 202 already has the information or when each operation method is modified due to the needs of the processor(s) 202).

To support the operations proposed in the present disclosure, the processor(s) 202 may transmit first information on the configuration of a PDCCH monitoring adaptation indication field for each DCI format and second information on a PDCCH monitoring operation method of the UE upon receiving a DCI format through the transceiver(s) 206. In this case, the first information and the second information may be transmitted separately or transmitted together in common configuration information. For example, the first information, second information, and/or configuration information may be transmitted via a higher layer signal (e.g., SIB or RRC signaling). Alternatively, the processor(s) 202 may transmit DCI including the first information, second information, and/or configuration information based on information transmitted through a higher layer through the transceiver(s) 206. In other words, the processor(s) 202 may transmit one of the configurations of PDCCH monitoring adaptation indication fields based on a plurality of DCI formats, which are provided (semi-)statically to the UE, and the configurations related to the PDCCH monitoring operation through the transceiver(s) 206 via specific means (for example, DCI or MAC CE/header).

Based on the first information, second information, and/or configuration information, which are related to the configuration of the PDCCH monitoring adaptation indication field based on the DCI format and the PDCCH monitoring operation, the processor(s) 202 may determine the timing of PDCCH transmission and the DCI format and then transmit a PDCCH at the location of the corresponding transmission timing through the transceiver(s) 206.

The processor(s) 202 may transmit a PDSCH or receive a PUSCH based on the PDCCH transmitted through the transceiver(s) 206. However, if the DCI included in the transmitted PDCCH is non-scheduling DCI, the PDSCH transmission or PUSCH reception may be omitted.

Specific methods of operating the processor(s) 202 described above may be based on at least one of [Method 1] to [Method 4].

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

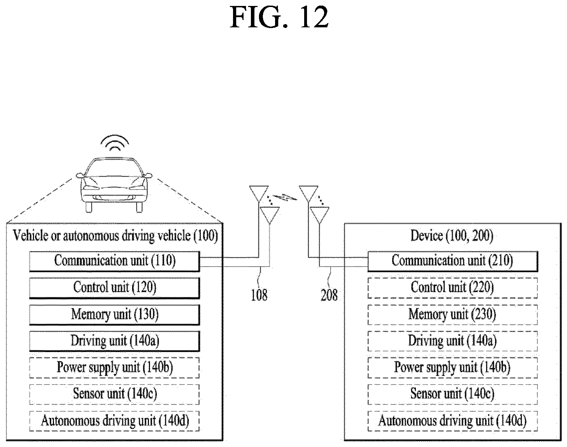

FIG. 12 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 12 a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

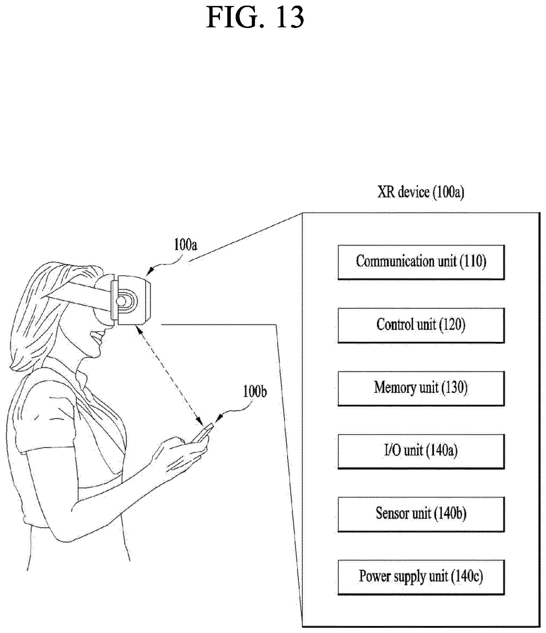

FIG. 13 illustrates an XR device applied to the present disclosure. The XR device may be implemented by an HMD, an HUD mounted in a vehicle, a television, a smartphone, a computer, a wearable device, a home appliance, a digital signage, a vehicle, a robot, etc.

Referring to FIG. 13, an XR device 100a may include a communication unit 110, a control unit 120, a memory unit 130, an I/O unit 140a, a sensor unit 140b, and a power supply unit 140c.

The communication unit 110 may transmit and receive signals (e.g., media data and control signals) to and from external devices such as other wireless devices, hand-held devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/commands needed to drive the XR device 100a/generate XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 transmits content request information to another device (e.g., a hand-held device 100b) or a media server through the communication unit 130. The communication unit 130 may download/stream content such as films or news from another device (e.g., the hand-held device 100b) or the media server to the memory unit 130. The control unit 120 may control and/or perform procedures such as video/image acquisition, (video/image) encoding, and metadata generation/processing with respect to the content and generate/output the XR object based on information about a surrounding space or a real object obtained through the I/O unit 140a/sensor unit 140b.

The XR device 100a may be wirelessly connected to the hand-held device 100b through the communication unit 110 and the operation of the XR device 100a may be controlled by the hand-held device 100b. For example, the hand-held device 100b may operate as a controller of the XR device 100a. To this end, the XR device 100a may obtain information about a 3D position of the hand-held device 100b and generate and output an XR object corresponding to the hand-held device 100b.

The embodiments of the present disclosure described herein below are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the present disclosure or included as a new claim by a subsequent amendment after the application is filed.

In the present disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term `BS' may be replaced with the term `fixed station,' `Node B,' `enhanced Node B (eNode B or eNB),' `access point,' etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

While the above-described method of transmitting and receiving a signal in an unlicensed band and an apparatus therefor have been described based on an example applied to a 5G NR system, the method and apparatus are applicable to various wireless communication systems in addition to the 5G NR system.

## Claims

1. A method of receiving a physical downlink control channel (PDCCH) by a user equipment (UE) in a wireless communication system, the method comprising:
receiving downlink control information (DCI) including a bit field related to PDCCH monitoring adaptation;
determining a PDCCH monitoring adaptation operation based on a value of the bit field; and
receiving the PDCCH based on the PDCCH monitoring adaptation operation,
wherein a number of bits included in the bit field is determined based on a format of the DCI.

2. The method of claim 1, wherein based on that the DCI has a first format, the bit field includes a first number of bits,
wherein based on that the DCI has a second format, the bit field includes a second number of bits, and
wherein the first number and the second number are different.

3. The method of claim 2, wherein the first number is greater than the second number.

4. The method of claim 2, wherein the first format is for a downlink (DL) signal, and
wherein the second format is for an uplink (UL) signal.

5. The method of claim 1, wherein based on the DCI has a first format, the PDCCH monitoring adaptation is related to PDCCH monitoring skipping, and
wherein based on the DCI has a second format, the PDCCH monitoring adaptation is related to search space set group (SSSG) switching.

6. A user equipment (UE) configured to receive a physical downlink control channel (PDCCH) in a wireless communication system, the UE comprising:
at least one transceiver;
at least one processor; and
at least one memory operably connected to the at least one processor and configured to store instructions that, when executed, cause the at least one processor to perform operations comprising:
receiving downlink control information (DCI) including a bit field related to PDCCH monitoring adaptation through the at least one transceiver;
determining a PDCCH monitoring adaptation operation based on a value of the bit field; and
receiving the PDCCH based on the PDCCH monitoring adaptation operation through the at least one transceiver,
wherein a number of bits included in the bit field is determined based on a format of the DCI.

7. The UE of claim 6, wherein based on that the DCI has a first format, the bit field includes a first number of bits,
wherein based on that the DCI has a second format, the bit field includes a second number of bits, and
wherein the first number and the second number are different.

8. The UE of claim 7, wherein the first number is greater than the second number.

9. The UE of claim 7, wherein the first format is for a downlink (DL) signal, and wherein the second format is for an uplink (UL) signal.

10. The UE of claim 6, wherein based on the DCI has a first format, the PDCCH monitoring adaptation is related to PDCCH monitoring skipping, and
wherein based on the DCI has a second format, the PDCCH monitoring adaptation is related to search space set group (SSSG) switching.

11. A user equipment (UE) configured to receive a physical downlink control channel (PDCCH) in a wireless communication system, the UE comprising:
at least one transceiver;
at least one processor; and
at least one memory operably connected to the at least one processor and configured to store instructions that, when executed, cause the at least one processor to perform operations comprising:
receiving downlink control information (DCI) including a bit field related to PDCCH monitoring adaptation;
determining a PDCCH monitoring adaptation operation based on a value of the bit field; and
receiving the PDCCH based on the PDCCH monitoring adaptation operation,
wherein a number of bits included in the bit field is determined based on a format of the DCI.

12. A computer-readable storage medium comprising at least one computer program that causes at least one processor to perform operations comprising:
receiving downlink control information (DCI) including a bit field related to PDCCH monitoring adaptation;
determining a PDCCH monitoring adaptation operation based on a value of the bit field; and
receiving the PDCCH based on the PDCCH monitoring adaptation operation,
wherein a number of bits included in the bit field is determined based on a format of the DCI.

13. A method of transmitting a physical downlink control channel (PDCCH) by a base station (BS) in a wireless communication system, the method comprising:
determining a value of a bit field related to PDCCH monitoring adaptation based on a PDCCH monitoring adaptation operation;
transmitting downlink control information (DCI) including the bit field; and
transmitting the PDCCH based on the PDCCH monitoring adaptation operation,
wherein a number of bits included in the bit field is determined based on a format of the DCI.

14. A base station (BS) configured to transmit a physical downlink control channel (PDCCH) in a wireless communication system, the BS comprising:
at least one transceiver;
at least one processor; and
at least one memory operably connected to the at least one processor and configured to store instructions that, when executed, cause the at least one processor to perform operations comprising:
determining a value of a bit field related to PDCCH monitoring adaptation based on a PDCCH monitoring adaptation operation;
transmitting downlink control information (DCI) including the bit field through the at least one transceiver; and
transmitting the PDCCH based on the PDCCH monitoring adaptation operation through the at least one transceiver,
wherein a number of bits included in the bit field is determined based on a format of the DCI.
